(19) Europäisches Patentamt / European Patent Office / Office européen des brevets

(11) **EP 4 712 617 A1**

(12) **EUROPEAN PATENT APPLICATION**
published in accordance with Art. 153(4) EPC

(43) Date of publication:
**18.03.2026   Bulletin 2026/12**

(21) Application number: **24802880.5**

(22) Date of filing: **30.04.2024**

(51) International Patent Classification (IPC):
**H04W 72/044** (2023.01)

(52) Cooperative Patent Classification (CPC):
**H04B 17/309; H04W 72/044; H04W 72/11**

(86) International application number:
**PCT/CN2024/090900**

(87) International publication number:
**WO 2024/230598 (14.11.2024 Gazette 2024/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.05.2023   CN 202310508570**

(71) Applicant: **Sony Group Corporation
Tokyo 108-0075 (JP)**

(72) Inventors:
• **MA, Ke**
  **Beijing 100083 (CN)**
• **WANG, Zhaocheng**
  **Beijing 100083 (CN)**
• **BAI, Yingshuang**
  **Beijing 100027 (CN)**
• **SUN, Chen**
  **Beijing 100027 (CN)**
• **ZHANG, Fan**
  **Beijing 100083 (CN)**

(74) Representative: **D Young & Co LLP
3 Noble Street
London EC2V 7BQ (GB)**

(54) **ELECTRONIC DEVICE AND METHOD FOR WIRELESS COMMUNICATION, AND COMPUTER-READABLE STORAGE MEDIUM**

(57)     An electronic device and a method for wireless communication, and a computer-readable storage medium. The electronic device for wireless communication comprises a processing circuit, wherein the processing circuit is configured to: dynamically or semi-statically determine the category of input information of a prediction model for a user equipment which is within a service range of the electronic device, wherein the prediction model is used for performing beam prediction on a beam to be used for communication between the electronic device and the user equipment; and provide the user equipment with beam prediction configuration information which comprises the determined category of the input information, so that the user equipment collects the input information according to the beam prediction configuration information. (Fig. 3)

FIG.3

## Description

This application claims priority to Chinese Patent Application No. 202310508570.0 titled "ELECTRONIC DEVICE AND METHOD FOR WIRELESS COMMUNICATION, AND COMPUTER-READABLE STORAGE MEDIUM", filed on May 06, 2023 with the China National Intellectual Property Administration (CNIPA), which is incorporated herein by reference in its entirety.

## FIELD

The present disclosure relates to the technical field of wireless communications, and in particular to an electronic apparatus and a method for wireless communications, and a computer-readable storage medium. More specifically, the present disclosure relates to an electronic apparatus and method for wireless communications and a computer-readable storage medium, with which performance of beam prediction is improved.

## BACKGROUND

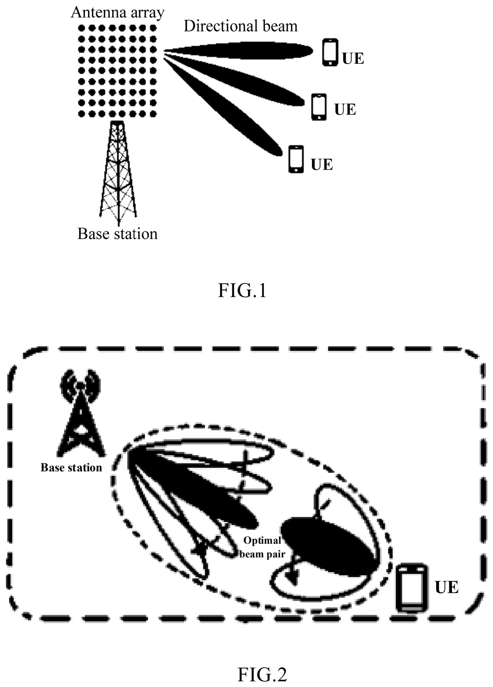

Beamforming technology is to form directional beams with concentrated energy by using large-scale antenna arrays, in order to combat high path loss. FIG. 1 illustrates an example of the beamforming technology. As shown in FIG. 1, a large-scale antenna array forms directional beams for communication between a base station and user equipment (UE). To implement the beamforming technology, it is necessary to perform a beam management process, that is, to obtain and track an optimal beam pair for communication. FIG. 2 illustrates an example of obtaining an optimal beam pair by performing beam management. As shown in FIG. 2, by performing beam management, an optimal (best) beam pair for communication between a base station and a UE may be obtained.

Generally, there are three types of methods for beam management. A first beam management method is based on beam scanning. In this method, all possible beam pairs are scanned and a pair of beams with the maximum receiving power is selected as the optimal beam pair. With this method, all possible beam pairs are traversed, causing a large beam training overhead, and it is easily affected by noise, that is, the method is sensitive to noise, and determination of the optimal beam is directly affected in a case of a large noise. A second beam management method is based on a channel model. In this method, a priori assumptions is made on the channel model, the problem of finding an optimal beam is modeled as an angle estimation problem, and an optimal beam pair is selected based on an estimated value. This method is highly dependent on the a priori assumptions of the channel model and has a limited scope of use. A third beam management method is based on deep learning. In this method, the feature extraction capability of deep learning is utilized to assist beam management. The existing beam management method based on deep learning cannot adapt to users, for example, with different movement speeds and in different channel environments.

How to achieve effective prediction of beams (for example, prediction of an optimal beam) is a hot topic in current research.

## SUMMARY

A brief summary of the present disclosure is given below, to provide a basic understanding of some aspects of the present disclosure. It should be understood that the following summary is not an exhaustive summary of the present disclosure. It is not intended to determine a key or important part of the present disclosure, nor does it intend to limit the scope of the present disclosure. The purpose is merely to present some concepts in a simplified form, as a preamble to a more detailed description discussed later.

According to an aspect of the present disclosure, an electronic apparatus for wireless communications is provided. The electronic apparatus includes processing circuitry configured to: determine, dynamically or semi-statically, category of input information of a prediction model for user equipment within a service range of the electronic apparatus, where the prediction model is used to perform beam prediction for beam(s) to be used for communication between the electronic apparatus and the user equipment; and provide, to the user equipment, beam prediction configuration information including the determined category of input information, for the user equipment collecting the input information based on the beam prediction configuration information. According to the embodiment of the present disclosure, performance of the beam prediction is improved.

According to an aspect of the present disclosure, an electronic apparatus for wireless communications is provided. The electronic apparatus includes processing circuitry configured to: receive beam prediction configuration information from network side equipment servicing the electronic apparatus, where the beam prediction configuration information includes category of input information of a prediction model determined dynamically or semi-statically by the network side equipment for the electronic apparatus, and the prediction model is used to perform beam prediction for beam(s) to be used for communication between the electronic apparatus and the network side equipment; and collect the input information based on the beam prediction configuration information. According to the embodiment of the present disclosure, performance of the beam prediction is improved.

According to an aspect of the present disclosure, a method for wireless communications is provided. The method includes: determining, dynamically or semi-statically, category of input information of a prediction model for user equipment within a service range of an electronic apparatus, where the prediction model is used to perform beam prediction for beam(s) to be used for communication between the electronic apparatus and the user equipment; and providing, to the user equipment, beam prediction configuration information including the determined category of input information, for the user equipment collecting the input information based on the beam prediction configuration information.

According to an aspect of the present disclosure, a method for wireless communications is provided. The method includes: receiving beam prediction configuration information from network side equipment servicing an electronic apparatus, where the beam prediction configuration information includes category of input information of a prediction model determined dynamically or semi-statically by the network side equipment for the electronic apparatus, and the prediction model is used to perform beam prediction for beam(s) to be used for communication between the electronic apparatus and the network side equipment; and collecting the input information based on the beam prediction configuration information.

According to other aspects of the present disclosure, further provided are a computer program code and a computer program product for implementing the above-described methods for wireless communications, and a computer-readable storage medium having the computer program code for implementing the method for wireless communications recorded thereon.

BRIEF DESCRIPTION OF THE DRAWINGS

For a further illustration of the above and other advantages and features of the present disclosure, embodiments of the present disclosure are described in detail hereinafter in conjunction with accompanying drawings. The drawings, together with the detailed description below, are incorporated into and form a part of the specification. Elements having the same function and structure are denoted by same reference signs. It should be noted that the drawings illustrate merely typical embodiments of the present disclosure and should not be construed as a limitation to the scope of the present disclosure. In the drawings:

FIG. 1 illustrates an example of a beamforming technology;

FIG. 2 illustrates an example of obtaining an optimal beam pair by performing beam management;

FIG. 3 illustrates a block diagram of functional modules of an electronic apparatus for wireless communications according to an embodiment of the present disclosure;

FIG. 4 illustrates an example of beam prediction according to an embodiment of the present disclosure;

FIG. 5 illustrates an example of an accelerometer, gyroscope, and compass of user equipment;

FIG. 6 illustrates an example of radio resource control signaling according to an embodiment of the present disclosure;

FIG. 7 illustrates an example of a simplified structure of a prediction model according to an embodiment of the present disclosure;

FIG. 8 illustrates an example of a structure of a reconstruction network model according to an embodiment of the present disclosure;

FIG. 9 illustrates a structural example of a multimodal fusion prediction model according to an embodiment of the present disclosure;

FIG. 10 illustrates an example of a structure of a prediction model according to an embodiment of the present disclosure;

FIG. 11 illustrates an example of a process of beam prediction by an electronic apparatus for single user equipment according to an embodiment of the present disclosure;

FIG. 12 illustrates an example of beam prediction for grouped users according to an embodiment of the present disclosure;

FIG. 13 illustrates an example in which user equipments corresponding to a same optimal beam during a predetermined time period are grouped into a same group according to an embodiment of the present disclosure;

FIG. 14 illustrates an example of grouping group members into new groups according to an embodiment of the present disclosure;

FIG. 15 illustrates an example of selecting a user subset according to an embodiment of the present disclosure;

FIG. 16 illustrates an example of a process of beam prediction by an electronic apparatus for grouped user equipment according to an embodiment of the present disclosure;

FIG. 17 illustrates variation of normalized beam gain with prediction time according to different schemes;

FIG. 18 shows a block diagram of functional modules of an electronic apparatus for wireless communications according to another embodiment of the present disclosure;

FIG. 19 shows a flow chart of a method for wireless communications according to a further embodiment of the present disclosure;

FIG. 20 shows a flow chart of a method for wireless communications according to another embodiment of the present disclosure;

FIG. 21 is a block diagram showing a first example of a schematic configuration of an eNB or gNB to which the technology of the present disclosure is applicable;

FIG. 22 is a block diagram showing a second example of a schematic configuration of an eNB or gNB to which the technology of the present disclosure is applicable;

FIG. 23 is a block diagram showing an example of a schematic configuration of a smart phone to which the technology of the present disclosure is applicable;

FIG. 24 is a block diagram showing an example of a schematic configuration of an automobile navigation device to which the technology of the present disclosure is applicable; and

FIG. 25 is a block diagram of an exemplary structure of a universal personal computer in which the methods and/or apparatuses and/or systems according to the embodiments of the present disclosure is applicable.

## DETAILED DESCRIPTION

Hereinafter, exemplary embodiments of the present disclosure will be described in conjunction with the accompanying drawings. For the sake of clarity and conciseness, not all features of an actual embodiment are described in the specification. However, it is to be appreciated that numerous implementation-specific decisions shall be made while implementing any of such actual embodiments so as to achieve specific objectives of a developer, for example, to comply with system- and business-related constraining conditions which vary from one implementation to another. Furthermore, it should be understood that the development work, although may be complicated and time-consuming, is only a routine task for those skilled in the art benefiting from the present disclosure.

Here, it should be further noted that in order to avoid obscuring the present disclosure due to unnecessary details, only apparatus structures and/or processing steps closely related to the solutions according to the present disclosure are illustrated in the drawings, and other details less related to the present disclosure are omitted.

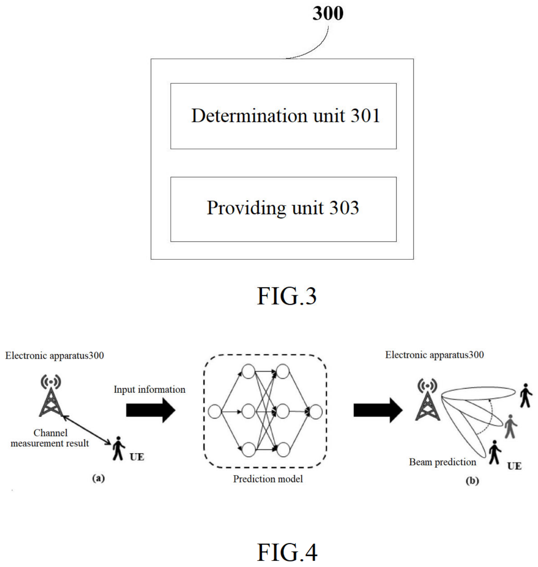

FIG. 3 shows a block diagram of functional modules of an electronic apparatus 300 for wireless communications according to an embodiment of the present disclosure.

As shown in FIG. 3, the electronic apparatus 300 includes a determination unit 301 and a providing unit 303. The determination unit 301 may be configured to determine, dynamically or semi-statically, category of input information of a prediction model (beam prediction model) for user equipment within a service range of the electronic apparatus 300, where the prediction model is used to perform beam prediction for beam(s) to be used for communication between the electronic apparatus 300 and the user equipment. The providing unit 303 may be configured to provide, to the user equipment, beam prediction configuration information including the determined category of input information, for the user equipment collecting the input information based on the beam prediction configuration information.

The determination unit 301 and the providing unit 303 may be implemented by one or more processing circuits. The processing circuitry may be implemented as a chip or a processor, for example. It should be understood that various functional units in the electronic apparatus 300 shown in FIG. 3 are only logical modules determined based on specific functions thereof, and are not intended to limit a specific implementation.

The electronic apparatus 300 may serve as network side equipment in a wireless communication system, and may be specifically provided on a base station side or be communicatively connected to a base station, for example. Here, it should be noted that the electronic apparatus 300 may be implemented at a chip level or at an apparatus level. For example, the electronic apparatus 300 may operate as the base station itself and may further include a memory, a transceiver (not shown), and other external devices. The memory may store related data information and programs that the electronic apparatus 300 needs to execute to achieve various functions. The transceiver may include one or more communication interfaces to support communications with different devices (such as a UE, a base station, and the like). An implementation of the transceiver is not specifically limited here.

The base station may be an eNB or gNB, as an example.

The wireless communication system according to the present disclosure may be a 5G NR (New Radio) communication system. Further, the wireless communication system according to the present disclosure may include a non-terrestrial network (NTN). Alternatively, the wireless communication system according to the present disclosure may further include a terrestrial network (TN). In addition, those skilled in the art may understand that the wireless communication system according to the present disclosure may be a 4G or 3G communication system.

The dynamically determining the category of input information of the prediction model may refer to determining the category of input information of the prediction model in real time and non-periodically. For example, the category of input information of the prediction model is determined by in a manner of specific event trigger.

Semi-static is between dynamic and periodic. The semi-statically determining the category of input information of the prediction model may refer to determining the category of input information of the prediction model periodically within a predetermined time period. Those skilled in the art may determine the predetermined time period based on application scenarios, experience, and the like.

Hereinafter, the category of input information may be referred to as modality (where the modality may be defined as information in a category), beam prediction modality, modal information. A set of categories of input information determined by the electronic apparatus 300 for the user equipment may be referred to as a beam prediction modality set, and the user equipment may be referred to as a user.

For example, the electronic apparatus 300 determines a beam prediction modality set specific for each user equipment, and the user equipment collects corresponding input information based on the modality set.

All beam prediction modalities are numbered by the electronic apparatus 300, and indexes (ID) of the modalities are included in the beam prediction modality set. Beam prediction modality sets of different user equipments may contain modalities in different quantities (an integer greater than or equal to 1) or with different indexes (for example, IDs of 1, 2, 3 or 1, 2, 4).

The prediction model may be, for example, a deep learning model.

Existing beam prediction solutions usually use fixed modal information as an input of a beam prediction model, and therefore cannot adapt to users with, for example, different user capabilities and/or in different channel environments, resulting in a decreased performance of beam prediction. For example, for a user in a complex channel environment (such as a non-line-of-sight channel environment), channel prediction is difficult, and using a single type of modal information may cause a decreased performance in beam prediction.

According to the embodiment of the present disclosure, the electronic apparatus 300 determines (updates), dynamically or semi-statically, the category of input information of a prediction model for each user equipment (determines the beam prediction configuration information dynamically or semi-statically). That is, dynamic or semi-static selection of a beam prediction modality set is supported. In this way, modal information corresponding to a modality in the set is usable as an input of the prediction model, and thereby the performance of beam prediction is improved (for example, an accuracy of the beam prediction is improved). That is, the electronic apparatus 300 flexibly determines the information category used for beam prediction for each user equipment, and integrates input information from multiple sources to perform beam prediction, so that the performance of beam prediction is improved.

As an example, the determination unit 301 may be configured to determine the category of input information based on user capability of the user equipment and/or channel environment where the user equipment is located, and the determination unit 301 may be configured to receive, through radio resource control (RRC) signaling, the user capability reported by the user equipment.

The electronic apparatus 300 may obtain the channel environment based on channel measurement, and obtain information about the user capability through user capability query.

Different user capabilities of the user equipment and/or channel environments where the user equipment is located correspond to different modal information required for beam prediction.

For example, in a complex and unstable channel, the electronic apparatus 300 needs to use more modal information for beam prediction; while in a simple and stable channel, the electronic apparatus 300 may achieve accurate prediction using less modal information. Some user equipment (having high user capability, for example) is able to provide more modal information, while some user equipment (having low user capability, for example) can only provide less modal information.

FIG. 4 illustrates an example of beam prediction according to an embodiment of the present disclosure. As shown in FIG. 4, the prediction model may perform beam prediction based on input information collected by the UE, thereby predicting a beam to be used for communication between the electronic apparatus 300 and the UE. The beam prediction is beneficial to improving the noise robustness of beam management. For example, in practical scenarios, stability of user movement ensures predictability of beam changes. Therefore, historical channel measurement results (such as the channel measurement result in FIG. 4(a)) may be used to extract user motion features, and then the prediction model may be used to achieve optimal beam prediction in the future (such as beam prediction with user movement as shown in FIG. 4(b)).

As an example, in addition to RRC signaling, those skilled in the art may conceive that the electronic apparatus 300 may receive the user capability reported by the user equipment through other signaling, which is not described in detail here.

As an example, the user capability information (which is information with which the user equipment notifies the electronic apparatus 300 of capability details) included in the RRC signaling includes user auxiliary sub-information, and a parameter of the user auxiliary sub-information includes category of auxiliary information for reflecting the user capability.

The conventional user capability information includes only information such as basic communication capability of a user, and does not support the user to notify a base station of category of user auxiliary information that the user can provide. In an embodiment according to the present disclosure, extended user capability information including user auxiliary sub-information is proposed, which notifies the electronic apparatus 300 of category of auxiliary information that the user can provide, so that the electronic apparatus 300 determines the beam prediction modality set. The extended user capability information is applicable for beam prediction and other communication scenarios such as wireless positioning and channel prediction.

As an example, the category of auxiliary information includes at least one of: motion feature information of the user equipment, position information of the user equipment, sensing information of the user equipment, communication capability of the user equipment, whether the user equipment supports use of the prediction model, and information about the beam.

As an example, the motion feature information of the user equipment may be information reflecting a speed of the user equipment.

As an example, the position information of the user equipment may be information indicating a position of the user equipment.

As an example, the sensing information of the user equipment may be information obtained based on software and/or hardware of the user equipment, and the sensing information includes a motion-related parameter of the user equipment.

As an example, the sensing information of the user equipment may include at least one of accelerometer information of the user equipment and gyroscope information of the user equipment.

As an example, the sensing information of the user equipment may include compass information of the user equipment.

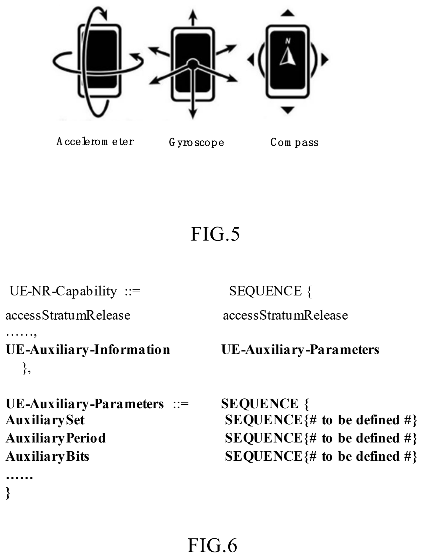

FIG. 5 illustrates an example of an accelerometer, gyroscope, and compass of user equipment. For example, the accelerometer information of the user equipment, the gyroscope information of the user equipment, and the compass information may be obtained respectively through the accelerometer, gyroscope, and compass shown in FIG. 5.

Capability reporting involved in the conventional technology includes only reporting of basic communication capability. However, in the embodiment according to the present disclosure, reporting of additional communication capability is added to support beam prediction based on the prediction model. For example, in order to support an input of the prediction model, the maximum amount of input information supported in one report, a quantitative granularity of parameters of the input information, or the like, are reported.

Whether the user equipment supports use of the prediction model may be used to indicate whether the prediction model is allowed to be used at the user equipment for beam prediction.

As an example, the information about the beam may represent information about the beam for communication between the electronic apparatus 300 and the user equipment. The information about the beam may include, for example, a shape of the beam and an angle of the beam.

As an example, the parameter of the user auxiliary sub-information further includes transmission period and/or bit numbers of transmission of the auxiliary information.

FIG. 6 illustrates an example of radio resource control signaling according to an embodiment of the present disclosure. In FIG. 6, "UE-NR-Capability" represents user capability information; SEQUENCE represents a sequence, and "to be defined" represents to be defined; accessStratumRelease is part of existing RRC signaling and represents an access version; UE-Auxiliary-Information represents user auxiliary sub-information; UE-Auxiliary-Parameters represents a parameter of the user auxiliary sub-information, which includes AuxiliarySet. The AuxiliarySet includes categories of auxiliary information, that is, category indexes of auxiliary information that are supported by a user (for example, in a set {1, 2, 3}, 1 represents a user position index, 2 represents a user speed index, and 3 represents a user accelerometer information index). For example, in the RRC signaling shown in FIG. 5, AuxiliaryPeriod represents a transmission period of the auxiliary information, and AuxiliaryBits indicates the bit numbers of transmission of the auxiliary information. For each category index, the transmission period (for example, supported transmission period for user position is {10ms, 20ms, 40ms}) and the bit numbers of transmission (for example, supported bit numbers of transmission for user position is {4bit, 8bit}) and other information which are supported may be further provided.

As an example, the transmission period of the auxiliary information is determined by measurement period of the user equipment and/or valid duration of the auxiliary information. That is, for each category index, the supported transmission period is determined by factors such as user measurement period and/or valid duration of the auxiliary information.

As an example, the bit numbers of transmission of the auxiliary information is determined by a measurement accuracy of the user equipment and/or a storage capacity of the user equipment. That is, for each category index, the supported bit numbers of transmission is determined by factors such as user measurement accuracy and/or user storage capacity.

As an example, the determination unit 301 may be configured to determine the channel environment based on channel measurement information, and the channel measurement information includes one or more of the following: a strength, phase and power of a sounding reference signal (SRS) received through a channel between the electronic apparatus 300 and the user equipment, a strength, phase and power of a channel state information reference signal (CSI-RS), and channel information of other frequency bands except a frequency band where the channel between the electronic apparatus 300 and the user equipment is located (which is sometimes referred to as other frequency band channel information).

The received power of the reference signal may be referred to as RSRP.

A result of channel measurement reflects the nature of the channel environment. For example, a LOS (direct or line of sight) scenario and a NLOS (non-direct or non-line of sight) scenario can be distinguished from each other through the result of channel measurement (including but not limited to channel state information (CSI), channel impulse response (CIR), received signal RSRP, and other frequency band channel information as mentioned above). In an implementation, for example, the electronic apparatus 300 may distinguish the LOS scenario from the NLOS scenario by calculating a kurtosis value of the CIR. A scenario is determined as the LOS scenario in a case where the kurtosis value is higher than a predetermined threshold, and a scenario is determined as the NLOS scenario in a case where the kurtosis value is equal to or lower than the predetermined threshold. Generally, channel for the LOS scenario is simple, and therefore beam prediction is easier; and the NLOS scenario is more complex and therefor beam prediction is more difficult. As an example, those skilled in the art may predetermine the predetermined threshold based on application scenarios or experience.

As an example, the category of input information includes at least one of: channel measurement information, motion feature information of the user equipment, position information of the user equipment, sensing information of the user equipment, communication capability of the user equipment, information about the beam, perception information of the electronic apparatus 300, and integrated sensing and communication information. The sensing information of the user equipment may be information obtained based on software and/or hardware of the user equipment, and the sensing information includes a motion-related parameter of the user equipment.

As an example, the channel measurement information, as input information, includes one or more of the following: a strength, phase and power of an SRS received through a channel between the electronic apparatus 300 and the user equipment, a strength, phase and power of a CSI-RS, and channel information of other frequency bands except a frequency band where the channel between the electronic apparatus 300 and the user equipment is located.

As an example, the motion feature information of the user equipment, as input information, may be information reflecting a speed of the user equipment.

As an example, the position information of the user equipment, as input information, may be information indicating a position of the user equipment.

As an example, the sensing information of the user equipment, as input information, may be information obtained based on software and/or hardware of the user equipment, and the sensing information includes a motion-related parameter of the user equipment. As an example, the sensing information of the user equipment may include at least one of accelerometer information of the user equipment and gyroscope information of the user equipment. As an example, the sensing information of the user equipment may include compass information of the user equipment.

As an example, the communication capability of the user equipment, as input information, may include basic communication capability of the user equipment, the maximum amount of input information supported in one report, a quantitative granularity of parameters of the input information, or the like.

As an example, the information about the beam, as input information, may represent information about the beam for communication between the electronic apparatus 300 and the user equipment. The information about the beam may include, for example, a shape of the beam and an angle of the beam.

As an example, the perception information of the electronic apparatus 300 refers to information obtained by the electronic device 300 through perception using the wireless perception capability, and may include, for example, positioning information of positioning the user equipment by the electronic apparatus 300.

In an integrated sensing and communication system, communication and perception are integrated. The integrated sensing and communication information may include one or more of the following: radar target detection information, and a strength, phase, and power of a radar beam reference signal.

As an example, the determination unit 301 may be configured so that the number of categories of input information of a prediction model determined for user equipment whose user capability does not satisfy a predetermined user capability condition is less than the number of categories of input information of a prediction model determined for user equipment whose user capability satisfies the predetermined user capability condition.

As an example, those skilled in the art may predetermine the predetermined user capability condition based on application scenarios or experience.

For example, the predetermined user capability condition may include that the user equipment is able to obtain more than a predetermined amount of modal information.

For example, the predetermined user capability condition may include that a movement speed of the user equipment is greater than or equal to a predetermined speed threshold. Those skilled in the art may further envisage other examples of the predetermined capability condition, which are not described in detail here.

As an example, the determination unit 301 may be configured so that the number of categories of input information of a prediction model determined for user equipment whose movement speed is less than a predetermined speed threshold is less than the number of categories of input information of a prediction model determined for user equipment whose movement speed is greater than or equal to the predetermined speed threshold.

As an example, those skilled in the art may predetermine the predetermined speed threshold based on application scenarios or experience.

As an example, the determination unit 301 may be configured so that the number of categories of input information of a prediction model determined for user equipment located in a channel environment satisfying a predetermined environment condition is less than the number of categories of input information of a prediction model determined for user equipment located in a channel environment not satisfying the predetermined environment condition.

As an example, those skilled in the art may predetermine the predetermined environment condition based on application scenarios or experience.

As an example, in a simple and stable channel (where the channel environment meets the predetermined environment conditions), beam prediction may be performed with less modal information; while in a complex and unstable channel (where the channel environment does not meet the predetermined environment condition), more modal information is needed for beam prediction. Generally, channel for the LOS scenario is simpler and thereby beam prediction may be performed with less modal information; and the NLOS scenario is more complex and thereby more modal information is needed for beam prediction.

As an example, the determination unit 301 may be configured to provide the beam prediction configuration information to the user equipment through radio resource control (RRC) signaling or downlink control information (DCI).

As an example, the beam prediction configuration information further includes resource configuration information (transmission configuration information) corresponding to the determined category of input information. The resource configuration information includes transmission period and/or bit numbers of transmission of the determined category of input information. The determination unit 301 may be configured to perform the beam prediction using the prediction model based on input information reported by the user equipment based on the resource configuration information.

The electronic apparatus 300 selects a beam prediction modality set for the user. The electronic apparatus 300 determines a transmission configuration of modalities in the modality set. The user equipment feeds back information collected based on the beam prediction modality set to the electronic apparatus 300 according to the transmission configuration. For example, when determining transmission periods of various modal information, the electronic apparatus 300 attempts to set the transmission periods of various modalities to a same value, that is, takes the value from an intersection of transmission periods supported. In a case where the intersection is empty, periods of most of the modalities are set to a same value. For a modality that does not support the transmission period, the electronic apparatus 300 performs sampling or interpolation on the received modal information to make all modal data in a same format.

For example, the beam prediction modality set includes three types of information, i.e., an SRS received signal, a Sub-6GHz frequency band channel information, and a user speed, whose transmission configuration requires a period of 40ms. Based on the period of 40ms, the user feeds back, to the electronic apparatus 300, the three types of modal information, i.e., the SRS received signal, the Sub-6GHz frequency band channel information and the user speed parameter, as three modal information inputs of the beam prediction model.

For example, the beam prediction modality set may include sensing information of the user equipment. As described above, the sensing information of the user equipment may include at least one of accelerometer information of the user equipment and gyroscope information of the user equipment. Feeding back the information collected based on the beam prediction modality set from the user equipment to the electronic apparatus 300 according to the transmission configuration belongs to Measurement reporting in the TS38.331 standard and is a type of RRC information. Appropriate modifications are made to the TS38.331 standard. 1) The Sensor-NameList in the standard includes only uncompensated Barometeric pressure measurement, UE Speed measurement, and UE orientation information. In the embodiment of the present disclosure, other sensor information such as accelerometer information and/or gyroscope information are added. 2) In the embodiment, the sensing information is allowed to be flexibly transmitted and configured, that is, the electronic apparatus 300 flexibly selects the transmission period, bit numbers of transmission, and the like, of the sensing information, and the user equipment reports the sensing information according to the configuration.

As an example, the determination unit 301 may be configured to modify beam prediction configuration information corresponding to the user equipment in an event-triggered manner, and provide the modified beam prediction configuration information to the user equipment. Therefore, dynamic adjustment of the beam prediction modality set is supported, so that the performance of beam prediction is ensured.

as an example, the event includes detecting that change in a channel environment where the user equipment is located satisfies a predetermined environment change condition. In a case where the change of the channel environment where the user equipment is located meets the predetermined environment change condition, the beam prediction modality set may be dynamically updated to ensure performance of the beam prediction. Furthermore, the transmission configuration information may be updated accordingly.

As an example, those skilled in the art may predetermine the predetermined environment change condition based on application scenarios or experience.

For example, the predetermined environment change condition may include a change in a movement speed of the user equipment being greater than or equal to a predetermined speed threshold; the predetermined environment change condition may include a change in a position of the user equipment being greater than or equal to a predetermined position threshold; and the predetermined environment change condition may include the user equipment moving from a simple channel environment to a complex channel environment. Those skilled in the art may further envisage other examples of the predetermined environment change condition, which are not described in detail here.

As an example, the determination unit 301 may be configured to directly modify the beam prediction configuration information corresponding to the user equipment without notifying the user equipment to re-report the user capability. For example, when the electronic apparatus 300 detects that the channel environment where the user equipment is located is changed, the electronic apparatus 300 directly modifies the beam prediction modality set and transmission configuration information of the user equipment and notifies the user equipment. This method is known as an update led by the electronic apparatus 300. With this method, the user equipment does not need to re-report the user capability, and therefore signaling overhead is reduced.

As an example, the determination unit 301 may be configured to notify the user equipment to re-report the user capability, and modify the beam prediction configuration information corresponding to the user equipment based on the re-received user capability. For example, when the electronic apparatus 300 detects that the channel environment where the user equipment is located is changed, the electronic apparatus 300 re-inquires the user capability, modifies the beam prediction modality set and transmission configuration information of the user equipment based on feedback from the user equipment, and sends the modification to the user equipment. For example, in a case where the user equipment is moved from a simple channel environment (such as a LOS channel environment) to a complex channel environment (such as a NLOS channel environment), the electronic apparatus 300 requests the user equipment to provide more modal information. After the user equipment agrees, the electronic apparatus 300 expands the beam prediction modality set and notifies the user equipment. This method is known as an interactive update by the electronic apparatus 300 and the user equipment, which can maintain the performance of beam prediction as much as possible under a complex channel condition.

As an example, for different determined categories of input information, the same prediction model is used for the beam prediction.

Different beam prediction modality sets correspond to different types and numbers of modalities. Therefore, an input format varies as the modal information is used as input information. If N different prediction models are established for N (N is a positive integer greater than 1) different beam prediction modality sets, the overhead for model storage is large. In the embodiment according to the present disclosure, prediction on different beam prediction modality sets may be performed with a same model, so that the storage overhead is effectively reduced.

Hereinafter, the prediction model is sometimes referred to as a deep multimodal learning model, and the learning in beam prediction using the deep multimodal learning model is referred to as deep multimodal learning (DML). In the deep multimodal learning, a modality is defined as a category of information. Therefore, the multimodal refers to multiple categories of information. In an embodiment according to the present disclosure, unified beam prediction based on deep multimodal learning is implemented.

As an example, the prediction model reconstructs, based on existing input information, missing input information corresponding to a missing category in different categories of input information relative to a predetermined quantity of predetermined categories of input information, so as to complete the different categories of input information into the predetermined quantity of predetermined categories of input information. As an example, those skilled in the art may predetermine the predetermined quantity of predetermined categories of input information based on application scenarios or experience.

For example, the missing modal information may be reconstructed based on existing reliable modal information, completing modal information corresponding to different beam prediction modality sets such that input formats (formats of input data) are the same.

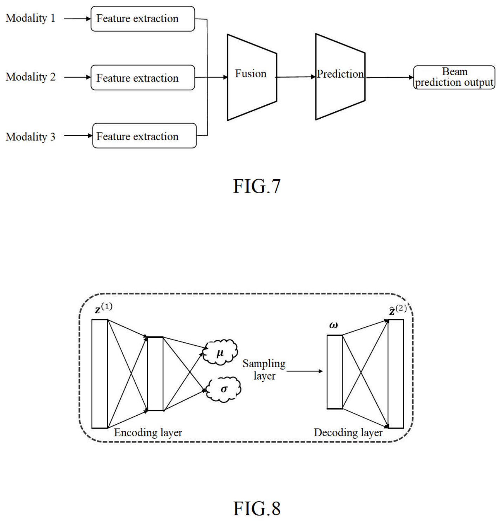

FIG. 7 illustrates an example of a simplified structure of a prediction model according to an embodiment of the present disclosure. As shown in FIG. 7, the deep multimodal learning model extracts features of multiple categories of information (for example, modality 1, modality 2, and modality 3) through feature extraction, finds a hidden relationship between different information categories, extracts complementary information of different information categories (that is, fuses different information), performs prediction, and finally outputs a beam prediction result. In this way, performance of the model prediction is improved.

As an example, the deep multimodal learning model may include a multimodal fusion prediction model and a reconstruction network model. The multimodal fusion prediction model is for fusing different types of modal information and perform beam prediction. The reconstruction network is capable of reconstructing the missing modal information based on the existing reliable modal information. Thereby, modal information corresponding to different beam prediction modality sets is supported to be the input of the prediction model. That is, the reconstruction network can solve the problem of disunity of combinations of categories of modal information for beam prediction.

As an example, the prediction model includes a variational autoencoder (VAE) for reconstruction. The VAE abstracts a hidden feature from existing input information and estimates the missing input information based on the hidden feature. For example, the VAE is an example of the reconstruction network model. In the VAE, an internal hidden feature is learned from the input, and then new modal information is generated using the hidden feature. Since there is internal relationship between different modal information, an internal hidden feature may be abstracted from the existing reliable modal information, and then the missing modal information is generated using the hidden feature.

As an example, the VAE includes an encoding layer, a sampling layer and a decoding layer. The encoding layer maps the existing input information into probability distribution parameters. The sampling layer performs sampling based on the probability distribution parameters to obtain an intermediate hidden layer, i.e., hidden features. The decoding layer obtains the missing input information through the intermediate hidden layer. That is, at the encoding layer stage, a probability distribution of internal hidden features is extracted from the existing modal information. The sampling layer samples the internal hidden features based on the probability distribution. The decoding layer generates the missing modal information based on the internal hidden features.

FIG. 8 illustrates an example of a structure of a reconstruction network model according to an embodiment of the present disclosure. For example, a received signal of wide beam training is a first modality $x^{(1)}$, a user position is a second modality $x^{(2)}$, and a user speed is a third modality $x^{(3)}$. Index in a beam prediction modality set of some users is {1, 2, 3}, and index in a beam prediction modality set of some users is {1}.

For a user whose beam prediction modality set is {1}, the reconstruction network model may utilize information of the first modality to approximately estimate information of the second modality and the third modality corresponding to the first modality, thereby completing all modality information. The reconstruction network model shown in FIG. 8 is described in detail as follows.

1) Input: a feature vector $z^{(1)}$ obtained after the first modal information $x^{(1)}$ passes through a convolutional layer.

2) Encoding layer: obtain a mean and variance $(\mu, \sigma)$ of an intermediate hidden layer through two fully connected layers.

3) Sampling layer: based on the mean and variance obtained in the encoding layer, sample to obtain the intermediate hidden layer $\omega$, expressed as $\omega \sim \mathcal{N}(\mu, \sigma)$.

4) Decoding layer: through a fully connected layer, transform the intermediate hidden layer $\omega$ into a feature vector $\tilde{z}^{(2)}$ of the second modal information and third modal information.

5) Output: the feature vector $\tilde{z}^{(2)}$ of the second modal information and third modal information. Based on the feature

vector $\hat{z}^{(2)}$ of the second modal information and third modal information, the second modal information $x^{(2)}$ and the third modal information $x^{(3)}$ can be obtained.

Thus, different categories of input information of all user equipment can be processed by a unified prediction model to perform beam prediction.

As an example, the prediction model further includes a convolutional neural network (CNN) and a long short-term memory neural network (LSTM) for beam prediction. For example, the CNN and the LSTM constitute the above-mentioned multimodal fusion prediction model. The CNN is a deep learning model that performs feature extraction through convolution and is suitable for extracting feature vectors from large-scale input data. The LSTM is a deep learning model that extracts time series features and is suitable for modeling a beam change process. For example, the LSTM obtains a state at a present time instant based on a state at a previous time instant and an input at the present time instant, and thereby predicts an output at the present time instant.

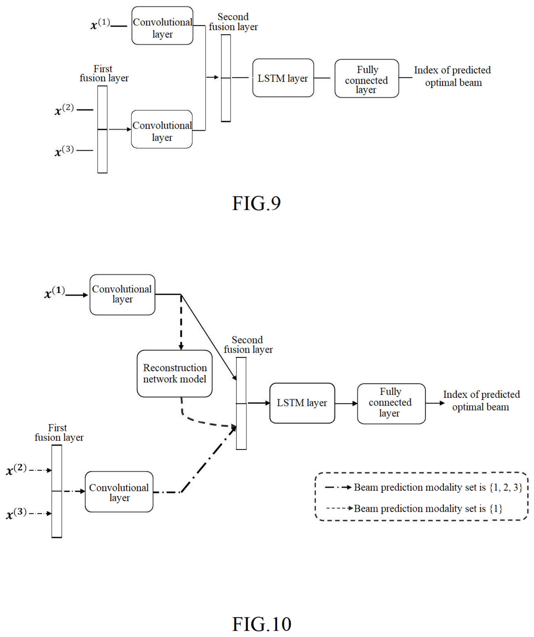

FIG. 9 illustrates a structural example of a multimodal fusion prediction model according to an embodiment of the present disclosure. The multimodal fusion prediction model shown in FIG. 9 is described in detail as follows.

1) Input: a time series $x^{(m)} = [x_1^{(m)}, x_2^{(m)}, \ldots, x_{n-1}^{(m)}]$ of three modalities over a period of time, where $m \in \{1, 2, 3\}$. For each element $x_i^{(m)}$ in the series, there has $1 \leq i \leq n-1$, corresponding to a time instant $t_i$.

2) First fusion layer: assuming that the second modality and the third modality are similar in data form and express a same type of information, fuse data of the second modality and the third modal in advance and splice data at various time instants directly.

3) Convolutional layer: extract features of the first modal information and the fusion information of the second modality and the third modality through a three-layer convolutional block. Each layer of the convolutional block includes a convolutional layer, a BN (batch-norm) layer, and a ReLU activation layer. The ReLU activation layer may be expressed as

$$\mathrm{ReLU}(x) = \begin{cases} 0, x < 0 \\ x, x \geq 0 \end{cases}$$

There is a pooling layer after the last convolutional layer to downsample the features extracted by the convolutional layer.

4) Second fusion layer: splice data of a feature vector of the first modal information with a feature vector of the fusion information of the second modality and third modality.

5) LSTM layer: an input of the LSTM includes two parts: 1. feature vector input at a certain time instant; and 2. LSTM output and cell state at a previous time instant.

6) Fully connected layer: transform the output of the LSTM layer into a designated size $Q \times 1$, where $Q$ represents the quantity of all beams.

The fully connected layer is represented as

$$y(t_n) = Wx(t_n) + b$$

In the equation, $x(t_n)$ represents an output of the LSTM and $y(t_n)$ represents an output of the fully connected layer. $W$ represents a linear weight of the fully connected layer, and $b$ represents a bias of the fully connected layer. A Softmax activation function is applied to convert an output of the last fully connected layer into a probability vector.

$$\hat{o}(t_n) = \left[ \hat{o}_1(t_n), \hat{o}_2(t_n), \ldots, \hat{o}_Q(t_n) \right]$$

Here, $\hat{o}_q(t_n)$ represents a probability that the q-th ($1 \leq q \leq Q$) beam is an optimal beam. A subscript with the highest probability corresponds to an index of a predicted optimal beam.

$$\hat{q}(t_n) = \underset{1 \le i \le Q}{\arg\max}\, \hat{o}_i(t_n)$$

7) Output: index $\hat{q}(t_n)$ of the predicted optimal beam.

When training a deep multimodal learning model, the cross entropy function may be used as a loss function. The cross entropy loss function may be expressed as:

$$loss(t_n) = -\sum_{q=1}^{Q} o_q(t_n)\, log\, \hat{o}_q(t_n)$$

In a case where the q-th beam is actually an optimal beam, there has $o_q(t_n) = 1$; otherwise, there has $o_q(t_n) = 0$.

The Adam optimizer in the gradient back-propagation algorithm may be applied for optimization.

FIG. 10 illustrates an example of a structure of a prediction model according to an embodiment of the present disclosure. In FIG. 10, the multimodal fusion prediction model shown in FIG. 9 and the reconstruction network model shown in FIG. 8 are combined, obtaining a unified beam prediction model based on deep multimodal learning. As shown in FIG. 10, in a case where the beam prediction modality set of a user is {1, 2, 3}, each modality is first subjected to feature extraction through the convolutional layer. Assuming that the second modality and the third modality are similar in data form and express a same type of information, the second modality and the third modality are fused in advance in the first fusion layer and data is spliced; then, information fusion is performed through the second fusion layer; and finally, through the LSTM layer and the fully connected layer, index of a predicted optimal beam is outputted. In a case where the beam prediction modality set of a user is {1}, the first modality is first subjected to feature extraction through the convolutional layer; then feature vectors of the second modality and the third modality are estimated through the reconstruction network model; then information fusion is performed through the second fusion layer; and finally, through the LSTM layer and the fully connected layer, index of a predicted optimal beam is outputted.

As can be seen from the descriptions of FIG. 8 to FIG. 10, for example, the input of the prediction model is a time series of different input information in a predetermined number of historical time slots, and the output of the prediction model is the predicted optimal beam. That is, the index of the optimal beam is predicted with the deep multimodal learning model. In the deep multimodal learning, the input is information corresponding to the beam prediction modality set over a period of time in the past, and the output is index of the predicted optimal beam. With the deep multimodal learning model, complementary information between different modalities is effectively fused and thereby prediction accuracy is improved.

As an example, those skilled in the art may predetermine the predetermined quantity based on application scenarios or experience.

For example, all modalities are input in a series. The input is a time series of M (M is a positive integer greater than 1) modalities over a period of time:

$$x^{(m)} = [x_1^{(m)}, x_2^{(m)}, ..., x_{n-1}^{(m)}]\ ,\quad m \in \{1,\, 2,\, ...,\, M\}$$

For each element $x_i^{(m)}$ in the series, there has $1 \le i \le n-1$, corresponding to a time instant $t_i$.

The output is index $q(t_n)$ of the optimal beam corresponding to time instant tn. $f^{(1)}$, $f^{(2)}$, ... , $f^{(Q)}$ represents all possible beams, and there has $q(t_n) \in \{1, 2, ..., Q\}$.

The deep multimodal learning model is for fitting a prediction function g(·) such that

$$q(t_n) = g\left((x_1^{(1)}, x_2^{(1)}, ..., x_{n-1}^{(1)}), ..., (x_1^{(M)}, x_2^{(M)}, ..., x_{n-1}^{(M)})\right)$$

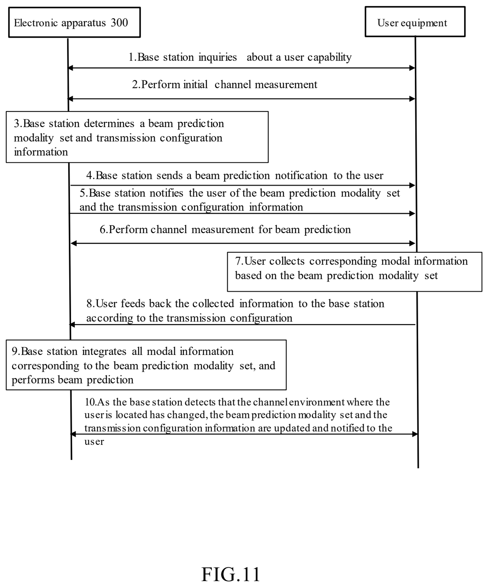

FIG. 11 illustrates an example of a process of beam prediction by an electronic apparatus 300 for single user equipment according to an embodiment of the present disclosure. In specific steps of FIG. 11, the electronic apparatus 300 is referred to as a base station, and the user equipment is referred to as a user. As shown in FIG. 11, the process includes the following steps.

In step 1, the base station inquiries about a user capability.

In step 2, initial channel measurement is performed.

In step 3, the base station determines a beam prediction modality set and transmission configuration information.

In step 4, the base station sends a beam prediction notification to the user.

In step 5, the base station notifies the user of the beam prediction modality set and the transmission configuration information.

In step 6, channel measurement for beam prediction is performed.

In step 7, the user collects corresponding modal information based on the beam prediction modality set.

In step 8, the user feeds back the collected information to the base station according to the transmission configuration.

In step 9, the base station integrates all modal information corresponding to the beam prediction modality set, and performs beam prediction.

Step 6 to step 9 are performed periodically.

In step 10, as the base station detects that the channel environment where the user is located has changed, the beam prediction modality set and the transmission configuration information are updated and notified to the user. Step 10 is executed when the channel environment changes. Step 10 allows dynamic adjustment of the beam prediction modality set and the transmission configuration information.

Unless explicitly stated, signaling involved in steps of FIG. 11 may be implemented via RRC and/or DCI.

As an example, the user equipment is a group member in a group obtained by the electronic apparatus 300 grouping multiple user equipments within a service range of the electronic apparatus 300. The determination unit 301 may be configured to dynamically or semi-statically group at least one user equipment located in a channel environment satisfying a predetermined similar environment condition into a group. The optimal beams corresponding to group members in a same group satisfy a predetermined similar beam condition. That is, users whose channel environments are similar are grouped into a same group, and the optimal beams of users in the same group are the same or similar. The grouping method supports dynamic adjustment. By grouping users, beam prediction results of users in a same group can be shared with each other. For example, users in a same room may share their beam prediction results with each other.

As an example, those skilled in the art may predetermine the predetermined similar beam condition based on application scenarios or experience.

As an example, input information collected by group members in a same group according to the beam prediction configuration information is fused and used as an input to the prediction model. Among users in a same group, the beam prediction modality information of different users may be fused (extracting complementary information of different information categories in a group of users) and used as the input of the deep multimodal learning model. By means of the beam prediction for the grouped users (grouped user beam prediction), accuracy of the beam prediction can be improved.

As an example, the determination unit 301 may be configured to select at least a part of the group members from the selected group to form a user subset based on user capabilities of the group members in the group and/or channel environments where the group members are located. For example, from a group of users, the electronic apparatus 300 selects some of the users as representatives of the group of users to form a user subset. Basis for the selection includes, but is not limited to, the channel environments and/or user capabilities. A beam prediction result of the user subset may be used as a benchmark for a beam prediction result of the overall group of users, and thereby the prediction overhead is reduced. For example, the selection of the user subset eliminates the need for other users to frequently feedback beam prediction modal information. The other users may directly use the beam prediction result of the user subset, so that the signaling overhead is reduced.

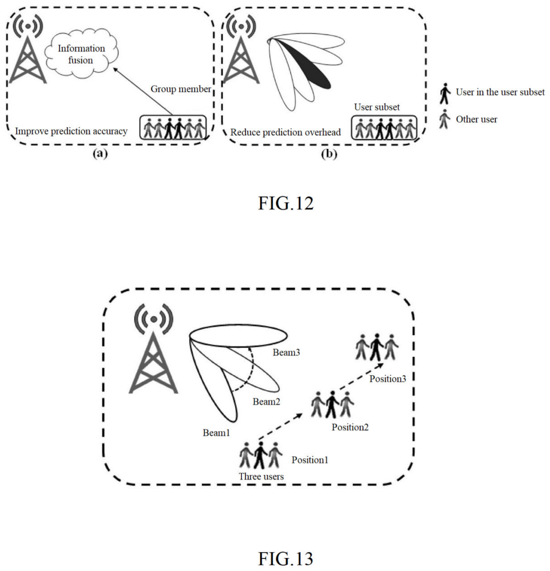

FIG. 12 illustrates an example of beam prediction for grouped users according to an embodiment of the present disclosure. As shown in (a) of FIG. 12, beam prediction modal information of group members may be fused, and thereby the accuracy of beam prediction is improved. As shown in (b) of FIG. 12, beam prediction is performed for a user subset, and a beam prediction result of the user subset is used as a benchmark for a beam prediction result of the overall group of users, and thereby the prediction overhead is reduced.

As an example, the determination unit 301 may be configured to perform beam prediction based on input information reported by a subset member in the user subset according to beam prediction configuration information, to obtain a beam prediction result for the user subset. All group members in the selected group communicate with the electronic apparatus 300 using the beam prediction result for the user subset. For example, only a user in the user subset participates in the beam prediction process and periodically sends modal information corresponding to the beam prediction modality set. The remaining users in the group do not participate in the beam prediction process and directly use the beam prediction result of the user subset. That is, the selected users in the group constitute a user subset, and the beam prediction result of the user subset is used for a beam prediction result of the overall group of users.

As an example, the determination unit 301 may be configured to: perform beam prediction based on input information, reported by subset members in the user subset according to the beam prediction configuration information at a period less than a predetermined period, to obtain a beam prediction result for the user subset, where the subset members in the user subset communicate with the electronic apparatus 300 using the beam prediction result for the user subset; and perform beam prediction based on input information, reported by other group members other than the user subset in the selected group according to the beam prediction configuration information at a period greater than or equal to the predetermined period, to obtain a beam prediction result for other group members, where the other group members adjust the beam prediction result for the user subset based on the beam prediction result for the other group members to obtain an adjusted beam prediction result, and the other group members communicate with the electronic apparatus 300 using the adjusted beam prediction result.

For example, all users in the group participate in the beam prediction process. Users in the user subset send modal information corresponding to their beam prediction modality set in a short period; and other users send modal information corresponding to their beam prediction modality set in a long period, and the other users adjust the beam prediction result of the user subset based on their own beam prediction result.

As an example, those skilled in the art may predetermine the predetermined period based on application scenarios or experience.

For example, the electronic apparatus 300 may initially group the users based on an initial channel measurement result.

As an example, the determination unit 301 may be configured to group user equipment whose correlation between channel state information (CSI) during a predetermined time period is greater than a predetermined correlation threshold into a same group. That is, within a predetermined time period, user equipment with highly correlated CSIs may be grouped together.

As an example, those skilled in the art may predetermine the predetermined time period based on application scenarios or experience.

As an example, those skilled in the art may predetermine the predetermined correlation threshold based on application scenarios or experience.

As an example, the determination unit 301 may be configured to group user equipment corresponding to a same optimal beam during a predetermined time period into a same group.

FIG. 13 illustrates an example in which user equipments corresponding to a same optimal beam during a predetermined time period are grouped into a same group according to an embodiment of the present disclosure. As shown in FIG. 13, as the three users move, an optimal beam corresponding thereto changes. For example, when the three users are at position 1, the optimal beam corresponding to the three users is beam 1; when the three users are at position 2, the optimal beam corresponding to the three users is beam 2; and when the three users are at position 3, the optimal beam corresponding to the three users is beam 3. The optimal beam corresponding to the three users remains the same, and therefore the three users are grouped into a same group.

As an example, the determination unit 301 may be configured to group the group members of a selected group into new groups in a case where a reference signal received power (RSRP) measured by the group members based on a beam prediction result for a selected user subset in the selected group is less than a predetermined power threshold. As an example, those skilled in the art may predetermine the predetermined power threshold based on application scenarios or experience. For example, the electronic apparatus 300 may configure a RSRP threshold $r_0$. All users in the group measure and predict the RSRP of the optimal beam (for example, the predicted optimal beam here is the beam prediction result of a subset of users in the group of users). In a case where the RSRP is less than the threshold $r_0$, a corresponding user is to be grouped into a new group (i.e., intra-group splitting). In a case where the RSRP value measured for some users are less than the threshold $r_0$, it is determined that these users obtain a low received power when using the beam prediction result in the group. Therefore, these users should be grouped into a new group (i.e., group merging), and a new user subset should be selected to re-perform beam prediction.

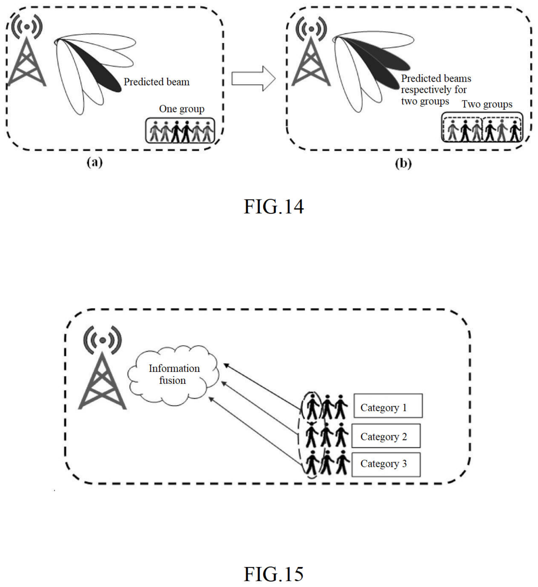

FIG. 14 illustrates an example of grouping group members into new groups according to an embodiment of the present disclosure. As shown in (a) of FIG. 14 , there is one group, and beam prediction is performed on this group. As shown in (b) of FIG. 14, the group shown in (a) of FIG. 14 is divided into two groups, and beam prediction is performed on the two groups respectively.

As an example, the determination unit 301 may be configured to merge different groups into a new group in a case where beam prediction results for different groups are the same during a predetermined period. That is, in a case where the predicted optimal beams of some user groups remain the same for a period of time, these user groups are to be merged into a new group. The predicted optimal beams of some user groups remain the same as each other for a period of time indicates that channel environment of the user groups are similar and the user groups may be merged into a new group to perform beam prediction together, so that signaling overhead is reduced.

An initial user grouping result may not be ideal. A user status may change at any time, causing the initial user grouping result no longer applicable. In an embodiment according to the present disclosure, dynamic adjustment of user grouping is supported, real-time validity of a grouping result is achieved, and performance of beam prediction of grouped users is improved.

As an example, the determination unit 301 may be configured to, for a selected group, group the group members with the same user capability into a same category, determine a category that needs to be included in the user subset, and select at least a part of group members from group members corresponding to the determined category to form a user subset. Different user groups are located in different channel environments. A channel environment in which a user group is located may change at any time. A fixed user subset may cause degradation in the performance of beam prediction for the grouped user. In an embodiment according to the present disclosure, the user subset can be flexibly selected, and modal information collected by the user subset can be integrated, so that accuracy of beam prediction is improved.

FIG. 15 illustrates an example of selecting a user subset according to an embodiment of the present disclosure. In a group of users, the users are classified based on their capabilities, and users supporting a same combination of capabilities are grouped. For example, a user that supports only channel measurement is classified to category 1, a user that supports channel measurement and provides a position of the user is classified to category 2, a user that supports channel measurement and provides a speed of the user is classified to category 3, a user that supports channel measurement and provides a position and a speed of the user is classified to category 4, and so on (category 1 to category 3 are illustrated in FIG. 15 as an example). The electronic apparatus 300 determines a category that needs to be included in the user subset and selects a user from the category.

As the channel environment of the group of users changes, the electronic apparatus 300 flexibly changes the user subset. For example, in a simple channel, the user subset may include only the user in category 1; and in a complex channel, the user subset needs to include users of categories with stronger capabilities (for example, in addition to the user in category 1, further including the user in category 2 and the user in category 3), in order to perform information fusion on modal information of users in these categories. For example, when a group of users moves from a simple channel to a complex channel, the electronic apparatus 300 expands the user subset and includes more categories of users into the user subset to fuse more modal information, so as to improve accuracy of beam prediction. By contrast, when a group of users moves from a complex channel to a simple channel, the electronic apparatus 300 narrows the user subset to reduce the overhead for beam prediction.

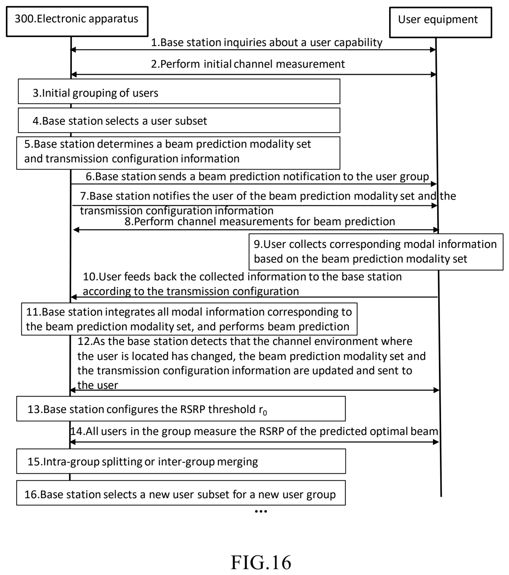

FIG. 16 illustrates an example of a process of beam prediction by an electronic apparatus 300 for grouped user equipment according to an embodiment of the present disclosure. In specific steps of FIG. 16, the electronic apparatus 300 is referred to as a base station, and the user equipment is referred to as a user. In this process example, a user grouping result and selection of a user subset are dynamically adjusted, so that overhead for beam prediction is reduced and accuracy for prediction accuracy is maintained. As shown in FIG. 16, the process includes the following steps.

In step 1, the base station inquiries about a user capability.

In step 2, initial channel measurement is performed. A result of the initial channel measurement may be used for initial user grouping, and may be further used for determining a user beam prediction modality set and transmission configuration information.

In step 3, initial grouping of users is performed.

In step 4, the base station selects a user subset.

In step 5, the base station determines a beam prediction modality set and transmission configuration information.

In step 6, the base station sends a beam prediction notification to the user group. There are two methods for the base station to send the beam prediction notification to the user group. In method 1, the base station sends a beam prediction notification to a user subset. This corresponds to a situation where only users in the user subset participate in the beam prediction process, which is beneficial to reducing signaling overhead. In method 2, the base station sends a beam prediction notification to all users in the user group. This corresponds to a situation where all users in the group participate in the beam prediction process, which is conducive to improving the prediction accuracy.

In step 7, the base station notifies the user of the beam prediction modality set and the transmission configuration information.

In step 8, channel measurements for beam prediction is performed.

In step 9, the user collects corresponding modal information based on the beam prediction modality set.

In step 10, the user feeds back the collected information to the base station according to the transmission configuration.

In step 11, the base station integrates all modal information corresponding to the beam prediction modality set, and performs beam prediction.

Step 7 to step 11 are performed periodically.

In step 12, as the base station detects that the channel environment where the user is located has changed, the beam prediction modality set and the transmission configuration information are updated and sent to the user.

In step 13, the base station configures the RSRP threshold $r_0$.

In step 14, all users in the group measure the RSRP of the predicted optimal beam.

In step 15, intra-group splitting or inter-group merging is performed.

Step 13 to step 15 involve dynamic adjustment of the user group.

In step 16, the base station selects a new user subset for a new user group.

Step 16 is executed when a new user group is generated.

Unless explicitly stated, signaling involved in steps of FIG. 16 may be implemented via RRC and/or DCI.

As an example, the determination unit 301 may be configured to classify group members in a selected group, based on user capabilities, into high-ability users whose user capabilities meet a predetermined capability condition and low-ability users whose user capabilities do not meet the predetermined capability condition, and notify group members in the group of information about the grouping and a grouping result of the high-ability users and/or low-ability users, so that the group members in the group perform beam prediction based on the prediction model. In this case, the beam prediction model is deployed on the user equipment side.

As an example, those skilled in the art may predetermine the predetermined capability condition based on application scenarios or experience.

For example, the predetermined capability condition may include that the user equipment is able to perform beam prediction using the prediction model. User equipment that is able to perform beam prediction using the prediction model may be classified as a high-capability user, and user equipment that is not able to perform beam prediction using the prediction model may be classified as a low-capability user. For example, the beam prediction model may be deployed at the high-capability user.

For example, the predetermined capability condition may include that the user equipment is able to obtain more than a predetermined amount of modal information. Those skilled in the art may further envisage other examples of the predetermined capability condition, which are not described in detail here.

As an example, the determination unit 301 may be configured to notify the group members of information about the grouping and a grouping result of the high-capability users and/or the low-capability users through RRC signaling or DCI.

As an example, the high-capability user in the selected group performs beam prediction based on the collected input information and using the prediction model, to obtain a beam prediction result, and shares the beam prediction result with the low-capability user. Information of users in the same group may be directly shared through D2D (device-to-device) communication. For example, the high-capability users in the group integrate their own modal information, input the integrated information to the prediction model to obtain the predicted optimal beam, and share the prediction result with the low-capability users in the group.

As an example, the high-ability users in the selected group share at least a portion of the collected input information with the low-ability users in response to a request received from the low-ability users. For example, the high-capability users in the group may share their modality information with the low-capability users through D2D communication. For example, in a case where a low-ability user in the group needs modal information that the low-ability user cannot provide, the low-ability user makes a request to the high-ability user in the group, and the high-ability user in the group shares the requested modal information.

For example, D2D communication is applied between members of a fleet in a vehicle network. A main member in the fleet may correspond to the above-mentioned high-capability user, and the other members in the fleet may correspond to the above-mentioned low-capability users.

Among users in the same group, some modal information is allowed to be shared, while some modal information is not allowed to be shared. Since the channel environments of users in the same group are similar, channel measurement information (SRS received signal and/or RSRP, CSI-RS received signal and/or RSRP, other frequency band channel information mentioned above, and the like) and integrated sensing and communication information (radar target detection information, radar beam received signal and/or RSRP, and the like) may be shared. In addition, user motion information such as user position, user speed, and user accelerometer information in the category of auxiliary information reflecting a user capability does not differ much between different users in the same group and therefore can be shared. On the other hand, detailed information such as user gyroscope information and user compass information may differ greatly between different users in the same group, and information sharing is not supported for such information.

An example of a process of modal information sharing in a D2D scene is briefly described below. In the following specific steps, the electronic apparatus 300 is referred to as a base station, and the user equipment is referred to as a user.

In S1, the base station inquiries about a user capability.

In S2, initial channel measurement is performed.

In S3, initial grouping of users is performed.

In S4, the base station classifies the users based on capability levels of the users (as high-capability users or low-capability users).

In S5, the base station notifies users of the grouping result and capability classification result.

In S8, the high-capability user collects modal information and performs beam prediction.

In S9, the high-ability user shares a prediction result with the low-ability user.

In S10, in response to the low-ability user in the group making a request to the high-ability user in the group, the high-ability user in the group shares the modal information requested.

The process of modality information sharing in the D2D scene may include at least one of S9 and S10.

Unless explicitly stated, signaling involved in steps S1 to S10 may be implemented via RRC and/or DCI.

A millimeter wave downlink transmission scenario is considered here. For a user, the maximum movement speed is 30m/s, the maximum acceleration is 0.2 times the speed, and the movement direction is randomly generated in [0, $2\pi$]. Channel data is generated with the DeepMIMO model according to an existing technology (see DeepMIMO: A Generic Deep Learning Dataset for Millimeter Wave and Massive MIMO Applications, A. Alkhateeb, et al., in Proc. ITA, Feb. 2019, pp. 1-8.). Simulation parameters are listed in Table 1.

Table 1 Simulation parameters

| DeepMIMO scenario | Outdoor 1 |
|---|---|
| Base station index | 1 |
| Center frequency | 28GHz |
| Number of antennas at base station end | 64 (ULA) |
| Number of wide beams at base station end | 8 |
| Number of narrow beams at base station end | 64 |
| Bandwidth | 50MHz |
| Total time of beam prediction | 800ms |
| Period of beam prediction | 16ms |

Three beam prediction modalities are considered. A received signal of wide beam training is a first modality $x^{(1)}$, a user position is a second modality $x^{(2)}$, and a user speed is a third modality $x^{(3)}$. After channel transmission, the electronic apparatus 300 receives noisy beam prediction modal information, and noise parameters are listed in Table 2.

Table 2 Noise parameters

| Modality | Noise level |
|---|---|
| Received signal of wide beam training | -78 (dBm) |
| User position | 1 (m) |
| User speed | 0.01 (m/s) |

Three situations of the beam prediction modality set are considered: In case one, the beam prediction modality set of all users is {1, 2, 3}, which is hereinafter referred to as a "complete modality". In case two, the beam prediction modality set of 90% of users is {1, 2, 3}, and the beam prediction modality set of 10% of users is {1}, which is hereinafter referred to as a "10% missing modality". In case three, the beam prediction modality set of 80% of users is {1, 2, 3}, and the beam prediction modality set of 20% of users is {1}, which is hereinafter referred to as a "20% missing modality".

Prediction accuracy and normalized beam gain are applied as evaluation indicators. Assuming that the total number of samples used for evaluation is Ni, and the number of samples where the beam predicted is an actual optimal beam is $N_2$, the prediction accuracy is expressed as:

$$\text{Accuracy} = \frac{N_2}{N_1}$$

Assuming that an average received power obtained with a predicted optimal beam is $\hat{P}_a$, and an average received power $P_a$ obtained with an actual predicted optimal beam, the normalized beam gain is expressed as:

$$G_N = \frac{\hat{P}_a}{P_a}$$

A prediction model that uses only a received signal of wide beam training as input is considered as baseline 1, and a prediction model that uses only information of a user position and speed as input is considered as baseline 2. The proposed beam prediction scheme according to the present disclosure (hereinafter referred to as the proposed scheme) is simulated under conditions of the complete modality, the 10% missing modality and the 20% missing modality, respectively.

The prediction accuracy of different schemes is shown in Table 3. It can be seen that compared with baseline 1 and baseline 2, the proposed scheme achieves a significant improvement in prediction accuracy. In addition, in the case of missing modality, the proposed scheme still maintains a high prediction accuracy.

Table 3 Simulation result of prediction accuracy

| Scheme | Prediction accuracy |
|---|---|
| Baseline 1 | 0.559 |
| Baseline 2 | 0.456 |
| Proposed scheme (complete modality) | 0.657 |
| Proposed scheme (10% missing modality) | 0.642 |
| Proposed scheme (20% missing modality) | 0.621 |

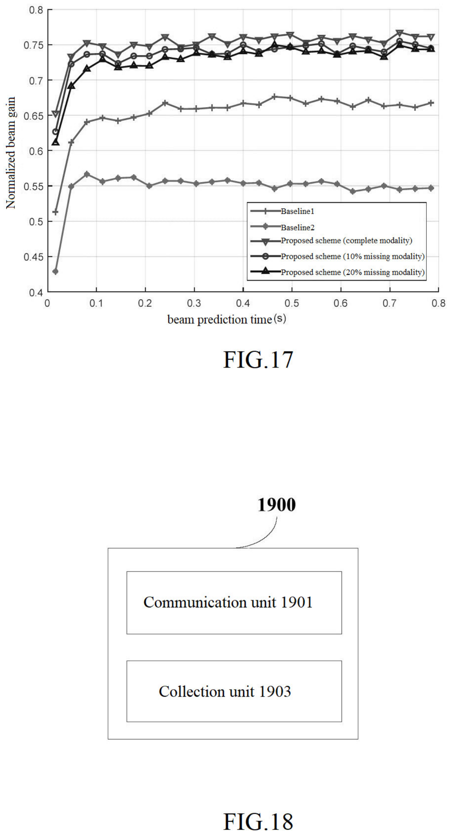

FIG. 17 illustrates variation of normalized beam gain with prediction time (beam prediction time) according to different schemes. It can be seen that compared with baseline 1 and baseline 2, the proposed scheme provides a higher normalized beam gain. In addition, in the case of missing modality, the proposed scheme still maintains a high normalized beam gain.

An electronic apparatus for wireless communications is further provided according to another embodiment of the present disclosure. FIG. 18 illustrates a block diagram of functional modules of an electronic apparatus 1900 for wireless communications according to another embodiment of the present disclosure.

As shown in FIG. 18, the electronic apparatus 1900 includes a communication unit 1901 and a collection unit 1903. The communication unit 1901 may be configured to receive beam prediction configuration information from network side equipment servicing the electronic apparatus 1900, where the beam prediction configuration information includes category of input information of a prediction model determined dynamically or semi-statically by the network side equipment for the electronic apparatus 1900, and the prediction model is used to perform beam prediction for beam(s) to be used for communication between the electronic apparatus 1900 and the network side equipment. The collection unit 1903 may be configured to collect the input information based on the beam prediction configuration information. It should be understood that various functional units in the electronic apparatus shown in FIG. 18 are only logical modules determined based on specific functions thereof, and are not intended to limit a specific implementation.

The communication unit 1901 and the collection unit 1903 may be implemented by one or more processing circuits. The processing circuitry may be implemented as a chip, for example.

The electronic apparatus 1900 may, for example, be provided on a user equipment side or be communicatively connected to the user equipment. Here, it should be noted that the electronic apparatus 1900 may be implemented at a chip level or at an apparatus level. For example, the electronic apparatus 1900 may operate as the user equipment itself and may further include a memory, a transceiver (not shown), and other external devices. The memory may store related data information and programs that the user equipment needs to execute to achieve various functions. The transceiver may include one or more communication interfaces to support communications with different devices (such as a base station, another UE, and the like). An implementation of the transceiver is not specifically limited here.

The wireless communication system according to the present disclosure may be a 5G NR (New Radio) communication system. Further, the wireless communication system according to the present disclosure may include a non-terrestrial network (NTN). Alternatively, the wireless communication system according to the present disclosure may further include a terrestrial network (TN). In addition, those skilled in the art may understand that the wireless communication system according to the present disclosure may be a 4G or 3G communication system.

As an example, the network side equipment in the embodiment of the electronic apparatus 1900 may be the electronic apparatus 300 as mentioned above. As an example, the electronic apparatus 1900 may be the user equipment involved in the above embodiments of the electronic apparatus 300.

According to the embodiment of the present disclosure, the electronic apparatus 1900 is able to collect the input information for beam prediction based on the category of input information of a prediction model determined (updated) dynamically or semi-statically (beam prediction configuration information determined dynamically or semi-statically) by the network side equipment. Thereby, the performance of beam prediction is improved (for example, improving an accuracy of beam prediction).

As an example, the category of input information is determined based on user capability of the electronic apparatus 1900 and/or channel environment where the electronic apparatus 1900 is located. The communication unit 1901 may be configured to report the user capability to the network side equipment through radio resource control (RRC) signaling.

Different user capabilities of the electronic apparatus 1900 and/or channel environments where the electronic apparatus 1900 is located correspond to different modal information required for beam prediction.

As an example, user capability information included in the RRC signaling includes user auxiliary sub-information, and a parameter of the user auxiliary sub-information includes category of auxiliary information for reflecting the user capability of the electronic apparatus 1900. For the RRC signaling, reference may be made to the description in the above embodiment of the electronic apparatus 300 in conjunction with FIG. 6, which is not repeated here.

In an embodiment according to the present disclosure, extended user capability information including user auxiliary sub-information is proposed, which notifies the network side equipment of category of auxiliary information that the electronic apparatus 1900 can provide, so that the network side equipment determines the beam prediction modality set.

As an example, the category of auxiliary information includes at least one of: motion feature information of the electronic apparatus 1900, position information of the electronic apparatus 1900, sensing information of the electronic apparatus 1900, communication capability of the electronic apparatus 1900, whether the electronic apparatus 1900 supports use of the prediction model, and information about the beam.

As an example, the sensing information of the electronic apparatus is information obtained based on software and/or hardware of the electronic apparatus 1900, and the sensing information includes a motion-related parameter of the electronic apparatus 1900.

For details of the motion feature information of the electronic apparatus, position information of the electronic apparatus 1900, sensing information of the electronic apparatus 1900, communication capability of the electronic apparatus 1900, whether the electronic apparatus 1900 supports use of the prediction model, and information about the beam, reference may be made to description in the embodiment of the electronic apparatus 300 above, which is not repeated here.

As an example, the parameter of the user auxiliary sub-information further includes transmission period and/or bit numbers of transmission of the auxiliary information.

As an example, the transmission period of the auxiliary information is determined by measurement period of the electronic apparatus 1900 and/or valid duration of the auxiliary information.

As an example, the bit numbers of transmission of the auxiliary information is determined by a measurement accuracy of the electronic apparatus 1900 and/or a storage capacity of the electronic apparatus 1900.

As an example, the channel environment is obtained based on channel measurement information, and the channel measurement information includes one or more of the following: a strength, phase and power of a sounding reference signal (SRS) received through a channel between the electronic apparatus 1900 and the network side equipment, a strength, phase and power of a channel state information reference signal (CSI-RS), and channel information of other frequency bands except a frequency band where the channel is located.

For the channel measurement information, reference may be made to the description in the above embodiment of the electronic apparatus 300, which is not repeated here.

As an example, the category of input information includes at least one of: channel measurement information, motion feature information of the electronic apparatus 1900, position information of the electronic apparatus 1900, sensing information of the electronic apparatus 1900, perception information of the network side equipment, and integrated sensing and communication information. The sensing information of the electronic apparatus 1900 is information obtained based on software and/or hardware of the electronic apparatus 1900, and the sensing information includes a motion-related parameter of the electronic apparatus 1900.

As an example, the integrated sensing and communication information includes one or more of the following: radar target detection information, and a strength, phase, and power of a radar beam reference signal.

For the input information including the channel measurement information, the motion feature information of the electronic apparatus 1900, the position information of the electronic apparatus 1900, the sensing information of the electronic apparatus 1900, and the perception information of the network side equipment, reference may be made to the description in the above embodiment of the electronic apparatus 300, which is not repeated here.

As an example, the number of categories of input information of a prediction model determined for an electronic apparatus whose user capability does not satisfy a predetermined user capability condition is less than the number of categories of input information of a prediction model determined for an electronic apparatus whose user capability satisfies the predetermined user capability condition.

For an example of the predetermined user capability condition, reference may be made to the description in the above embodiment of the electronic apparatus 300, which is not repeated here.

As an example, the number of categories of input information of a prediction model determined for an electronic apparatus whose movement speed is less than a predetermined speed threshold is less than the number of categories of input information of a prediction model determined for an electronic apparatus whose movement speed is greater than or equal to the predetermined speed threshold.

As an example, the number of categories of input information of a prediction model determined for an electronic apparatus located in a channel environment satisfying a predetermined environment condition is less than the number of categories of input information of a prediction model determined for an electronic apparatus located in a channel environment not satisfying the predetermined environment condition.

For an example of the predetermined environment condition, reference may be made to the description in the above embodiment of the electronic apparatus 300, which is not repeated here.

As an example, the communication unit 1901 may be configured to receive the beam prediction configuration information through RRC signaling or downlink control information (DCI).

As an example, the beam prediction configuration information further includes resource configuration information corresponding to the determined category of input information determined by the network side equipment, where the resource configuration information includes transmission period and/or bit numbers of transmission of the determined category of input information. The communication unit 1901 may be configured to report the input information based on the resource configuration information, for the network side equipment to perform the beam prediction using the prediction model.

For an example of the beam prediction configuration information including the resource configuration information, reference may be made to the description in the above embodiment of the electronic apparatus 300, which is not repeated here.

As an example, the communication unit 1901 may be configured to receive beam prediction configuration information which corresponds to the electronic apparatus 1900 and is modified in an event-triggered manner.

As an example, the event includes detecting that change in a channel environment where the electronic apparatus 1900 is located satisfies a predetermined environment change condition. As an example, the electronic apparatus is not notified to re-report the user capability, and the beam prediction configuration information corresponding to the electronic apparatus 1900 is directly modified by the network side equipment. As an example, the communication unit 1901 may be configured to receive a notification of re-reporting the user capability, and re-report the user capability. The beam prediction configuration information corresponding to the electronic apparatus 1900 is modified by the network side equipment based on the re-reported user capability.

For an example of the predetermined environment change condition, reference may be made to the description in the above embodiment of the electronic apparatus 300, which is not repeated here.

For an example of the electronic apparatus 1900 receiving beam prediction configuration information which corresponds to the electronic apparatus 1900 and is modified in an event-triggered manner, reference may be made to the description in the above embodiment of the electronic apparatus 300, which is not repeated here.

For different determined categories of input information, the same prediction model is used for the beam prediction.

As an example, the prediction model reconstructs, based on existing input information, missing input information corresponding to a missing category in different categories of input information relative to a predetermined quantity of predetermined categories of input information, so as to complete the different categories of input information into the predetermined quantity of predetermined categories of input information.

As an example, the prediction model includes a variational autoencoder (VAE) for reconstruction. The VAE abstracts a hidden feature from existing input information and estimates the missing input information based on the hidden feature.

As an example, the VAE includes an encoder, a sampler and a decoder. The encoder maps the existing input information into probability distribution parameters. The sampler performs sampling based on the probability distribution parameters to obtain an intermediate hidden layer, i.e., hidden features. The decoder obtains the missing input information through the intermediate hidden layer.

As an example, the prediction model further includes a convolutional neural network and a long short-term memory neural network for beam prediction.

As an example, an input of the prediction model is a time series of different input information in a predetermined number of historical time slots, and an output of the prediction model is the predicted optimal beam.

For an example of the prediction model, reference may be made to the description in the above embodiment of the electronic apparatus 300, which is not repeated here.

As an example, the electronic apparatus 1900 is a group member in a group obtained by the network side equipment grouping multiple electronic apparatuses within a service range of the network side equipment. At least one electronic apparatus located in a channel environment satisfying a predetermined similar environment condition are dynamically or semi-statically grouped into a group. The optimal beams corresponding to group members in a same group satisfy a predetermined similar beam condition.

As an example, input information collected by group members in a same group according to the beam prediction configuration information is fused and used as an input to the prediction model.

As an example, at least a part of the group members is selected from the selected group to form a user subset based on user capabilities of the group members in the group and/or channel environments where the group members are located.

As an example, the beam prediction result for the user subset is obtained by performing beam prediction based on input information reported by a subset member in the user subset according to beam prediction configuration information. All group members in the selected group communicate with the network side equipment using the beam prediction result for the user subset.

As an example, the beam prediction result for the user subset is obtained by performing beam prediction based on input information, reported by subset members in the user subset according to the beam prediction configuration information at a period less than a predetermined period, where the subset members in the user subset communicate with the network side equipment using the beam prediction result for the user subset. A beam prediction result for other group members is obtained by performing beam prediction based on input information, reported by other group members other than the user subset in the selected group according to the beam prediction configuration information at a period greater than or equal to the predetermined period, where the other group members adjust the beam prediction result for the user subset based on the beam prediction result for the other group members to obtain an adjusted beam prediction result, and the other group members communicate with the network side equipment using the adjusted beam prediction result.

As an example, electronic apparatuses whose correlation between channel state information (CSI) during a predetermined time period is greater than a predetermined correlation threshold are grouped into a same group.

As an example, user equipments corresponding to a same optimal beam during a predetermined time period are grouped into a same group.

As an example, the group members of a selected group are grouped into new groups in a case where a reference signal received power measured by the group members based on a beam prediction result for a selected user subset in the selected group is less than a predetermined power threshold.

As an example, different groups are merged into a new group in a case where beam prediction results for different groups are the same during a predetermined period.

As an example, for a selected group, group members with the same user capability are grouped into a same category, a category that needs to be included in the user subset is determined, and at least a part of group members is selected from group members corresponding to the determined category to form a user subset.

As an example, group members in a selected group are classified, based on user capabilities, into high-ability users whose user capabilities meet a predetermined capability condition and low-ability users whose user capabilities do not meet the predetermined capability condition. The group members in the group receive, from the network side equipment, information about the grouping and a grouping result of the high-ability users and/or low-ability users, so that the group members in the group perform beam prediction based on the prediction model.

As an example, the group members receive information about the grouping and a grouping result of the high-capability users and/or the low-capability users through RRC signaling or DCI.

As an example, the high-capability user in the selected group performs beam prediction based on the collected input information and using the prediction model, to obtain a beam prediction result, and shares the beam prediction result with the low-capability user.

As an example, the high-ability user in the selected group shares at least a portion of the collected input information with the low-ability user in response to a request received from the low-ability user, so that the low-ability user performs beam prediction using the prediction model to obtain a beam prediction result.

For examples of grouping, selection of a user subset, high-capability users and low-capability users, reference may be made to the description in the above embodiment of the electronic apparatus 300, which is not repeated here.

In the description of the electronic apparatuses for wireless communications in the above embodiments, some processes or methods are further disclosed. Hereinafter, an overview of the methods is given without repeating some of details discussed above. It should be noted that although disclosed in the description of the electronic apparatuses for wireless communications, the methods do not necessarily adopt the components as described or be performed by those components. For example, an embodiment of the electronic apparatus for wireless communications may be implemented partially or entirely using hardware and/or firmware, while a method for wireless communications discussed below may be implemented entirely by a computer-executable program, although the method may employ the hardware and/or firmware for the electronic apparatus for wireless communications.

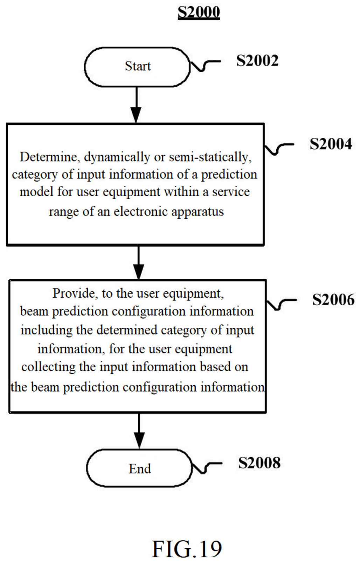

FIG. 19 illustrates a flow chart of a method S2000 for wireless communications according to an embodiment of the present disclosure. The method S2000 starts from step S2002. In step S2004, category of input information of a prediction model is determined, dynamically or semi-statically, for user equipment within a service range of an electronic apparatus, where the prediction model is used to perform beam prediction for beam(s) to be used for communication between the electronic apparatus and the user equipment. In step S2006, beam prediction configuration information including the determined category of input information is provided to the user equipment, for the user equipment collecting the input information based on the beam prediction configuration information. The method S2000 ends at step S2008.

This method may be performed, for example, by the electronic apparatus 300 as described above. For specific details, reference may be made to the description of relevant processes of the electronic apparatus 300, which is not repeated here.

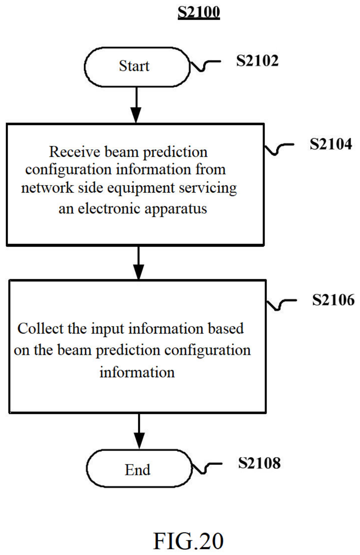

FIG. 20 illustrates a flow chart of a method S2100 for wireless communications according to another embodiment of the present disclosure. The method S2100 starts from step S2102. In step S2104, beam prediction configuration information is received from network side equipment servicing an electronic apparatus, where the beam prediction configuration information includes category of input information of a prediction model determined dynamically or semi-statically by the network side equipment for the electronic apparatus, and the prediction model is used to perform beam prediction for beam(s) to be used for communication between the electronic apparatus and the network side equipment. In step S2106, the input information is collected based on the beam prediction configuration information. The method S2100 ends at step S2108.

This method may be performed, for example, by the electronic apparatus 1900 as described above. For specific details, reference may be made to the description of relevant processes of the electronic apparatus 1900, which is not repeated here.

The technology of the present disclosure is applicable to various products.

The electronic apparatus 300 may be implemented as various network side apparatus. The network side apparatus may be provided on a base station side or be connected to a base station. The base station may be implemented as any type of evolved Node B (eNB) or gNB (5G base station). An eNB includes, for example, a macro eNB and a small eNB. The small eNB may be an eNB covering a cell smaller than a macro cell, such as a pico eNB, a micro eNB, or a home (femto) eNB. A similar situation may apply to the gNB. Alternatively, the base station may be implemented as any other type of base station, such as a NodeB or a base transceiver station (BTS). The base station may include a body (which is also referred to as a base station device) configured to control wireless communications and one or more remote radio heads (RRHs) arranged at a different place from the body. In addition, various types of electronic apparatuses may operate as base stations by temporarily or semi-persistently performing base station functions.

The electronic apparatus 1900 may be implemented as various user equipment. The user equipment may be implemented as a mobile terminal (such as a smart phone, a tablet personal computer (PC), a notebook PC, a portable game terminal, a portable/dongle-type mobile router, and a digital camera) or a vehicle-mounted terminal (such as an automobile navigation device). The user equipment may be implemented as a terminal that performs machine-to-machine (M2M) communications (which is also referred to as a machine type communication (MTC) terminal). Furthermore, the user equipment may be a wireless communication module (such as an integrated circuit module including a single wafer) installed on each of the above-mentioned terminals.

[Application Examples of Base Station]

(First Application Example)

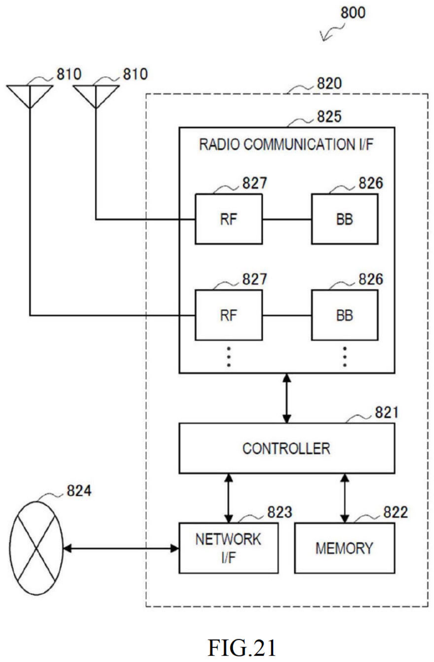

FIG. 21 is a block diagram showing a first example of a schematic configuration of an eNB or gNB to which the technology of the present disclosure is applicable. It should be noted that the following description is made taking an eNB as an example. The technology of the present disclosure is also applicable to a gNB. An eNB 800 includes one or more antennas 810 and a base station device 820. The base station device 820 and each of the antennas 810 may be connected to each other via a RF cable.

Each of the antennas 810 includes a single or multiple antenna elements (such as multiple antenna elements included in a multi-input multi-output (MIMO) antenna), and is used for the base station device 820 to transmit and receive wireless signals. As shown in FIG. 21, the eNB 800 may include multiple antennas 810. For example, the multiple antennas 810 may be compatible with multiple frequency bands used by the eNB 800. Although FIG. 21 shows an example in which the eNB 800 includes multiple antennas 810, the eNB 800 may include a single antenna 810.

The base station device 820 includes a controller 821, a memory 822, a network interface 823, and a radio communication interface 825.

The controller 821 may be, for example, a CPU or DSP, and operates various functions of a higher layer of the base station device 820. For example, the controller 821 generates a data packet based on data in a signal processed by the radio communication interface 825, and transfers the generated packet via the network interface 823. The controller 821 may bundle data from multiple baseband processors to generate a bundled packet, and transfer the generated bundled packet. The controller 821 may have logical functions of performing control such as radio resource control, radio bearer control, mobility management, admission control, and scheduling. The control may be performed in conjunction with a nearby eNB or a core network node. The memory 822 includes an RAM and an ROM, and stores a program executed by the controller 821 and various types of control data (such as a terminal list, transmission power data, and scheduling data).

The network interface 823 is a communication interface for connecting the base station device 820 to a core network 824. The controller 821 may communicate with the core network node or another eNB via the network interface 823. In this case, the eNB 800 and the core network node or another eNB may be connected to each other through a logical interface (such as an S1 interface and an X2 interface). The network interface 823 may be a wired communication interface or a radio communication interface for a wireless backhaul line. In a case that the network interface 823 is a radio communication interface, the network interface 823 may use a higher frequency band for wireless communications than a frequency band used by the radio communication interface 825.

The radio communication interface 825 supports any cellular communication scheme (such as Long-Term Evolution (LTE) and LTE-Advanced), and provides wireless connection to a terminal in a cell of the eNB 800 via the antenna 810. The radio communication interface 825 may typically include, for example, a baseband (BB) processor 826 and an RF circuit 827. The BB processor 826 may perform, for example, coding/decoding, modulation/demodulation and multiplexing/de-multiplexing, and perform various types of signal processes of layers (for example, layer 1, media access control (MAC), radio link control (RLC) and packet data convergence protocol (PDCP)). Instead of the controller 821, the BB processor 826 may have a part or all of the above-mentioned logical functions. The BB processor 826 may be a memory storing a communication control program, or a module including a processor and a related circuit configured to execute the program. Updating the program may change the functions of the BB processor 826. The module may be a card or blade inserted into a slot of the base station device 820. Alternatively, the module may be a chip mounted on the card or blade. In addition, the RF circuit 827 may include, for example, a mixer, a filter and an amplifier, and transmit and receive a wireless signal via the antenna 810.

As shown in FIG. 21, the radio communication interface 825 may include multiple BB processors 826. For example, the multiple BB processors 826 may be compatible with multiple frequency bands used by the eNB 800. As shown in FIG. 21, the radio communication interface 825 may include multiple RF circuits 827. For example, the multiple RF circuits 827 may be compatible with multiple antenna elements. Although FIG. 21 shows an example in which the radio communication interface 825 includes multiple BB processors 826 and multiple RF circuits 827, the radio communication interface 825 may include a single BB processor 826 or a single RF circuit 827.

In the eNB 800 as shown in FIG. 21, the electronic apparatus 300, when implemented as a base station, has a transceiver that may be implemented by the radio communication interface 825. At least a part of the functions may be implemented by the controller 821. For example, the controller 821 may be able to improve performance of beam prediction by executing functions of units in the electronic apparatus 300.

(Second Application Example)

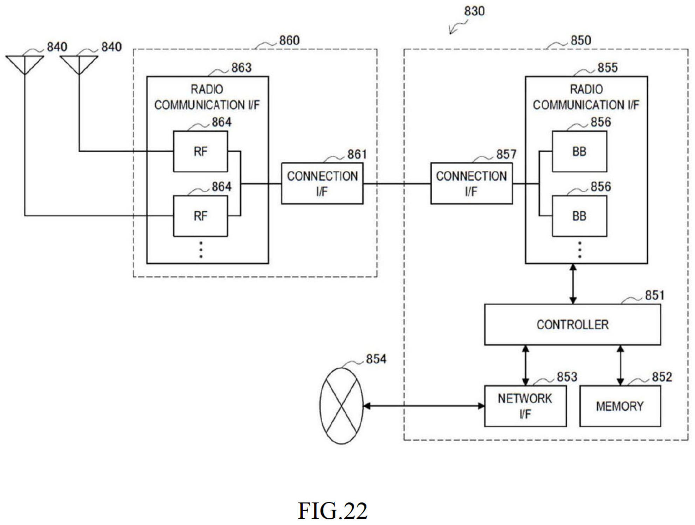

FIG. 22 is a block diagram showing a second example of a schematic configuration of an eNB or gNB to which the technology of the present disclosure is applicable. It should be noted that the following description is made taking the eNB as an example. The technology of the present disclosure is also applicable to the gNB. An eNB 830 includes a single or multiple antennas 840, a base station device 850 and an RRH 860. The RRH 860 and each of the antennas 840 may be connected to each other via an RF cable. The base station device 850 and the RRH 860 may be connected to each other via a high-speed line such as an optical fiber cable.

Each of the antennas 840 includes a single or multiple antenna elements (such as multiple antenna elements included in a MIMO antenna), and is used for the RRH 860 to transmit and receive a wireless signal. As shown in FIG. 22, the eNB 830 may include multiple antennas 840. For example, the multiple antennas 840 may be compatible with multiple frequency bands used by the eNB 830. Although FIG. 22 shows an example in which the eNB 830 includes multiple antennas 840, the eNB 830 may include a single antenna 840.

The base station device 850 includes a controller 851, a memory 852, a network interface 853, a radio communication interface 855, and a connection interface 857. The controller 851, the memory 852, and the network interface 853 are the same as the controller 821, the memory 822, and the network interface 823 described with reference to FIG. 21.

The radio communication interface 855 supports any cellular communication scheme (such as LTE and LTE-advanced), and provides wireless communications to a terminal located in a sector corresponding to the RRH 860 via the RRH 860 and the antenna 840. The radio communication interface 855 may typically include, for example, a BB processor 856. The BB processor 856 is the same as the BB processor 826 described with reference to FIG. 21, except that the BB processor 856 is connected to an RF circuit 864 of the RRH 860 via the connection interface 857. As shown in FIG. 22, the radio communication interface 855 may include multiple BB processors 856. For example, the multiple BB processors 856 may be compatible with multiple frequency bands used by the eNB 830. Although FIG. 22 shows an example in which the radio communication interface 855 includes multiple BB processors 856, the radio communication interface 855 may include a single BB processor 856.

The connection interface 857 is an interface for connecting the base station device 850 (the radio communication interface 855) to the RRH 860. The connection interface 857 may be a communication module for communication in the above-described high-speed line that connects the base station device 850 (the radio communication interface 855) to the RRH 860.

The RRH 860 includes a connection interface 861 and a radio communication interface 863.

The connection interface 861 is an interface for connecting the RRH 860 (the radio communication interface 863) to the base station device 850. The connection interface 861 may be a communication module for communication in the above-mentioned high-speed line.

The radio communication interface 863 transmits and receives wireless signals via the antenna 840. The radio communication interface 863 may typically include, for example, the RF circuit 864. The RF circuit 864 may include, for example, a mixer, a filter and an amplifier, and transmit and receive wireless signals via the antenna 840. As shown in FIG. 22, the radio communication interface 863 may include multiple RF circuits 864. For example, the multiple RF circuits 864 may support multiple antenna elements. Although FIG. 22 shows an example in which the radio communication interface 863 includes multiple RF circuits 864, the radio communication interface 863 may include a single RF circuit 864.

In the eNB 830 as shown in FIG. 22, the electronic apparatus 300, when implemented as a base station, has a transceiver that may be implemented by the radio communication interface 855. At least a part of the functions may be implemented by the controller 851. For example, the controller 851 may be able to improve performance of beam prediction by executing functions of units in the electronic apparatus 300.

[Application Example of User Equipment]

(First Application Example)

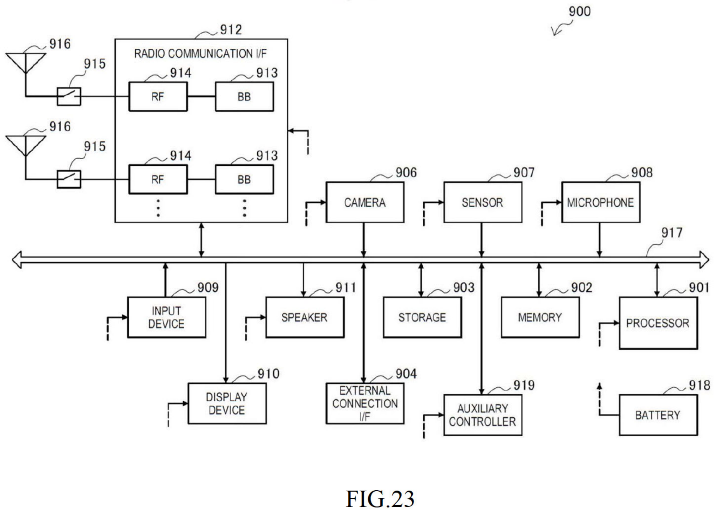

FIG. 23 is a block diagram showing an example of a schematic configuration of a smart phone 900 to which the technology of the present disclosure is applicable. The smart phone 900 includes a processor 901, a memory 902, a storage device 903, an external connection interface 904, a camera 906, a sensor 907, a microphone 908, an input device 909, a display device 910, a speaker 911, a radio communication interface 912, one or more antenna switches 915, one or more antennas 916, a bus 917, a battery 918, and an auxiliary controller 919.

The processor 901 may be, for example, a CPU or a system on chip (SoC), and controls functions of the application layer and other layers of the smart phone 900. The memory 902 includes an RAM and an ROM, and stores data and programs executed by the processor 901. The storage device 903 may include a storage medium, such as a semiconductor memory and a hard disk. The external connection interface 904 is an interface for connecting an external device (such as a memory card and a universal serial bus (USB) device) to the smart phone 900.

The camera 906 includes an image sensor (such as a charge coupled device (CCD) and a complementary metal oxide semiconductor (CMOS)), and generates a captured image. The sensor 907 may include a group of sensors, such as a measurement sensor, a gyroscope sensor, a geomagnetic sensor, and an acceleration sensor. The microphone 908 converts sound inputted to the smart phone 900 into an audio signal. The input device 909 includes, for example, a touch sensor configured to detect a touch on a screen of the display device 910, a keypad, a keyboard, a button, or a switch, and receives an operation or information inputted from a user. The display device 910 includes a screen, such as a liquid crystal display (LCD) or an organic light emitting diode (OLED) display, and displays an output image of the smart phone 900. The speaker 911 converts the audio signal outputted from the smart phone 900 into sound.

The radio communication interface 912 supports any cellular communication scheme (such as LTE and LTE-Advanced), and performs wireless communications. The radio communication interface 912 may generally include, for example, a BB processor 913 and an RF circuit 914. The BB processor 913 may perform, for example, encoding/decoding, modulation/demodulation, and multiplexing/demultiplexing, and perform various types of signal processing for wireless communications. In addition, the RF circuit 914 may include, for example, a mixer, a filter and an amplifier, and transmit and receive a wireless signal via the antenna 916. It should be noted that, although the figure shows a situation where one RF link is connected to one antenna, this is only illustrative, and a situation where one RF link is connected to multiple antennas through multiple phase shifters is also possible. The radio communication interface 912 may be a chip module on which the BB processor 913 and the RF circuit 914 are integrated. As shown in FIG. 23, the radio communication interface 912 may include multiple BB processors 913 and multiple RF circuits 914. Although FIG. 23 shows an example in which the radio communication interface 912 includes multiple BB processors 913 and multiple RF circuits 914, the radio communication interface 912 may include a single BB processor 913 or a single RF circuit 914.

In addition to the cellular communication scheme, the radio communication interface 912 may support another type of wireless communication scheme, such as a short-range wireless communication scheme, a near field communication scheme, and a wireless local area network (LAN) scheme. In this case, the radio communication interface 912 may include a BB processor 913 and an RF circuit 914 for each wireless communication scheme.

Each of the antenna switches 915 switches a connection destination of the antenna 916 among multiple circuits (for example, circuits for different wireless communication schemes) included in the radio communication interface 912.

Each of the antennas 916 includes a single or multiple antenna elements (such as multiple antenna elements included in a MIMO antenna), and is configured for the radio communication interface 912 to transmit and receive wireless signals. As shown in FIG. 23, the smart phone 900 may include multiple antennas 916. Although FIG. 23 shows an example in which the smart phone 900 includes multiple antennas 916, the smart phone 900 may include a single antenna 916.

In addition, the smart phone 900 may include antenna(s) 916 for each wireless communication scheme. In this case, the antenna switches 915 may be omitted from the configuration of the smart phone 900.

The processor 901, the memory 902, the storage device 903, the external connection interface 904, the camera 906, the sensor 907, the microphone 908, the input device 909, the display device 910, the speaker 911, the radio communication interface 912, and the auxiliary controller 919 are connected to each other via the bus 917. The battery 918 supplies power to each block of the smart phone 900 as shown in FIG. 23 via a feeder line. The feeder line is partially shown as a dashed line in the figure. The auxiliary controller 919 operates the least necessary function of the smart phone 900 in a sleep mode, for example.

In the smart phone 900 as shown in FIG. 23, in a case where the electronic apparatuses 1900 is implemented, for example, as a smart phone on the user equipment side, the transceiver of the electronic apparatus 1900 may be implemented by the radio communication interface 912. At least part of the functions may be implemented by the processor 901 or the auxiliary controller 919. For example, the processor 901 or the auxiliary controller 919 may be able to improve performance of beam prediction by executing functions of units in the electronic apparatus 1900.

(Second Application Example)

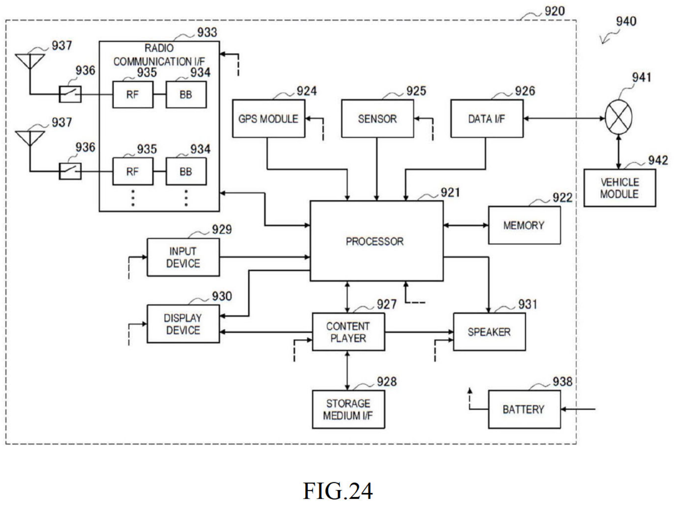

FIG. 24 is a block diagram showing an example of a schematic configuration of an automobile navigation apparatus 920 to which the technology of the present disclosure is applicable. The automobile navigation device 920 includes a processor 921, a memory 922, a global positioning system (GPS) module 924, a sensor 925, a data interface 926, a content player 927, a storage medium interface 928, an input device 929, a display device 930, a speaker 931, a radio communication interface 933, one or more antenna switches 936, one or more antennas 937, and a battery 938.

The processor 921 may be, for example, a CPU or SoC, and controls the navigation function and other functions of the automobile navigation device 920. The memory 922 includes an RAM and an ROM, and stores data and programs executed by the processor 921.

The GPS module 924 measures a position (such as latitude, longitude, and altitude) of the automobile navigation device 920 based on a GPS signal received from a GPS satellite. The sensor 925 may include a group of sensors, such as a gyroscope sensor, a geomagnetic sensor, and an air pressure sensor. The data interface 926 is connected to, for example, an in-vehicle network 941 via a terminal not shown, and acquires data (such as vehicle speed data) generated by a vehicle.

The content player 927 reproduces content stored in a storage medium (such as a CD and a DVD) inserted into the storage medium interface 928. The input device 929 includes, for example, a touch sensor configured to detect a touch on a screen of the display device 930, a button, or a switch, and receives an operation or information inputted from a user. The display device 930 includes a screen such as an LCD or OLED display, and displays an image or reproduced content of a navigation function. The speaker 931 outputs a sound or reproduced content of the navigation function.

The radio communication interface 933 supports any cellular communication scheme (such as LTE and LTE-Advanced), and performs wireless communications. The radio communication interface 933 may generally include, for example, a BB processor 934 and an RF circuit 935. The BB processor 934 may perform, for example, encoding/decoding, modulation/demodulation, and multiplexing/demultiplexing, and perform various types of signal processing for wireless communications. In addition, the RF circuit 935 may include, for example, a mixer, a filter and an amplifier, and transmit and receive a wireless signal via the antenna 937. The radio communication interface 933 may be a chip module on which the BB processor 934 and the RF circuit 935 are integrated. As shown in FIG. 24, the radio communication interface 933 may include multiple BB processors 934 and multiple RF circuits 935. Although FIG. 24 shows an example in which the radio communication interface 933 includes multiple BB processors 934 and multiple RF circuits 935, the radio communication interface 933 may include a single BB processor 934 or a single RF circuit 935.

In addition to the cellular communication scheme, the radio communication interface 933 may support another type of wireless communication scheme, such as a short-range wireless communication scheme, a near field communication scheme, or a wireless LAN scheme. In this case, the radio communication interface 933 may include a BB processor 934 and an RF circuit 935 for each wireless communication scheme.

Each of the antenna switches 936 switches a connection destination of the antenna 937 among multiple circuits (such as circuits for different wireless communication schemes) included in the radio communication interface 933.

Each of the antennas 937 includes a single or multiple antenna elements (such as multiple antenna elements included in a MIMO antenna), and is configured for the radio communication interface 933 to transmit and receive wireless signals. As shown in FIG. 24, the automobile navigation device 920 may include multiple antennas 937. Although FIG. 24 shows an example in which the automobile navigation device 920 includes multiple antennas 937, the automobile navigation device 920 may include a single antenna 937.

In addition, the automobile navigation device 920 may include antenna(s) 937 for each wireless communication scheme. In this case, the antenna switches 936 may be omitted from the configuration of the automobile navigation device 920.

The battery 938 supplies power to blocks of the automobile navigation device 920 shown in FIG. 24 via a feeder line. The feeder line is partially shown as a dashed line in the figure. The battery 938 accumulates electric power supplied from the vehicle.

**In** the automobile navigation device 920 as shown in FIG. 24, in a case where the electronic apparatuses 1900 is implemented, for example, as an automobile navigation device on the user equipment side, the transceiver of the electronic apparatus 1900 may be implemented by the radio communication interface 933. At least part of the functions may be implemented by the processor 921. For example, the processor 921 may be able to improve performance of beam prediction by executing functions of units in the electronic apparatus 1900.

The technology of the present disclosure may be implemented as an in-vehicle system (or vehicle) 940 including the vehicle navigation device 920, an in-vehicle network 941, and one or more blocks of vehicle modules 942. The vehicle modules 942 generate vehicle data (such as vehicle speed, engine speed, and failure information), and outputs the generated data to the in-vehicle network 941.

Basic principles of the present disclosure are described above in conjunction with the specific embodiments. However, it should be noted that those skilled in the art can understand that all or any of steps or components of the methods and apparatuses of the present disclosure may be implemented in any computing device (including processors, storage media, and the like) or a network of computing devices in a form of hardware, firmware, software or a combination thereof. Such implementation can be realized by those skilled in the art after reading the description of the present disclosure, by utilizing basic knowledge of circuit design or basic programming skills.

Moreover, a program product storing machine-readable instruction codes is further provided according to an embodiment of the present disclosure. The instruction codes, when read and executed by a machine, may implement the method according to any of the embodiments of the present disclosure.

Accordingly, a storage medium for carrying the program product storing the machine-readable instruction codes is further included in the present disclosure. The storage medium includes, but is not limited to, a floppy disk, an optical disk, a magneto-optical disk, a storage card, a memory stick, and the like.

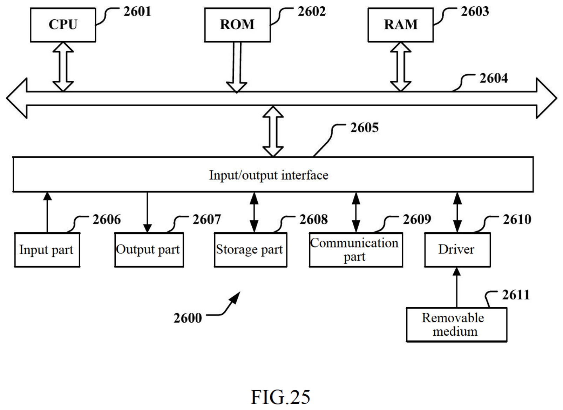

In a case of implementing the embodiments of the present disclosure in software or firmware, the program consisting of the software is mounted to a computer with a dedicated hardware structure (such as a general-purpose computer 2600 as shown in FIG. 25) from the storage medium or network. The computer, when mounted with various programs, performs various functions.

In FIG. 25, a central processing unit (CPU) 2601 executes various processes according to a program stored in a read-only memory (ROM) 2602 or a program loaded from a storage part 2608 to a random-access memory (RAM) 2603. In the RAM 2603, data required for the CPU 2601 to perform various processes or the like is stored as necessary. The CPU 2601, the ROM 2602 and the RAM 2603 are connected to each other via a bus 2604. An input/output interface 2605 is connected to the bus 2604.

The following components are connected to the input/output interface 2605: an input part 2606 (including a keyboard, a mouse, and the like), an output part 2607 (including a display, such as a cathode ray tube (CRT) and a liquid crystal display (LCD), a loudspeaker, and the like), a storage part 2608 (including a hard disk and the like), and a communication part 2609 (including a network interface card, such as a LAN card, and a modem). The communication part 2609 performs communication processing via a network, such as the Internet. A driver 2610 may be connected to the input/output interface 2605 as needed. A removable medium 2611, such as a magnetic disk, an optical disk, a magnetic optical disk, and a semiconductor memory, is mounted to the driver 2610 as required, so that a computer program read therefrom is mounted to the storage part 2608 as required.

In a case that the above processes are implemented by software, the program consisting the software is mounted from a network, such as the Internet, or from a storage medium, such as the removable medium 2611.

Those skilled in the art should understood that, the storage medium is not limited to the removable medium 2611, as shown in FIG. 25, which stores a program and is distributed separately from the device so as to provide the program for a user. Examples of the removable medium 2611 includes a magnetic disk (including a floppy disk (registered trademark)), an optical disk (including a compact disk read-only memory (CD-ROM) and a Digital Versatile Disk (DVD)), a magneto-optical disk (including a mini disk (MD) (registered trademark)), and a semiconductor memory. Alternatively, the storage medium may be the ROM 2602, the hard disk contained in the storage part 2608, or the like. The storage medium stores a program and is distributed to the user along with an apparatus in which the storage medium is incorporated.

It should be further noted that components or steps in the apparatus, method and system of the present disclosure can be decomposed and/or recombined. Such decomposition and/or recombination should be considered equivalents of the present disclosure. Furthermore, steps for executing the above processes may naturally be executed in a chronological order as described, but do not necessarily need to be executed in the chronological order. Certain steps may be performed in parallel with or independently of each other.

Finally, it should be noted that terms "include", "comprise" or any other variants are intended to be non-exclusive. Therefore, a process, method, article or device including a series of elements includes not only the elements but also other elements that are not enumerated, or further includes elements inherent to the process, method, article or device. In addition, unless expressively limited otherwise, the statement "comprising (including) a(n)..." does not exclude existence of other similar elements in the process, method, article or device.

Although the embodiments of the present disclosure are described in detail above with reference to the accompanying drawings, it should be understood that the embodiments are only for illustrating the present disclosure and do not constitute a limitation to the present disclosure. For those skilled in the art, various modifications and changes can be made to the embodiments without departing from the spirit and scope of the present disclosure. Therefore, the scope of the present disclosure is limited by only the appended claims and equivalents thereof.

The present technology may be implemented as the following solutions.

Solution 1. An electronic apparatus for wireless communications, comprising processing circuitry configured to:

determine, dynamically or semi-statically, category of input information of a prediction model for user equipment within a service range of the electronic apparatus, wherein the prediction model is used to perform beam prediction for beam(s) to be used for communication between the electronic apparatus and the user equipment; and

provide, to the user equipment, beam prediction configuration information including the determined category of input information, for the user equipment collecting the input information based on the beam prediction configuration information.

Solution 2. The electronic apparatus according to solution 1, wherein

the processing circuitry is configured to determine the category of input information based on user capability of the user equipment and/or channel environment where the user equipment is located; and

the processing circuitry is configured to receive, through radio resource control (RRC) signaling, a user capability reported by the user equipment.

Solution 3. The electronic apparatus according to solution 2, wherein

user capability information included in the RRC signaling includes user auxiliary sub-information, and a parameter of the user auxiliary sub-information includes category of auxiliary information for reflecting the user capability.

Solution 4. The electronic apparatus according to solution 3, wherein the category of auxiliary information includes at least one of:

motion feature information of the user equipment, position information of the user equipment, sensing information of the user equipment, communication capability of the user equipment, whether the user equipment supports use of the prediction model, and information about the beam.

Solution 5. The electronic apparatus according to solution 4, wherein the sensing information of the user equipment is information obtained based on software and/or hardware of the user equipment, and includes a motion-related parameter of the user equipment.

Solution 6. The electronic apparatus according to any one of solutions 3 to 5, wherein the parameter of the user auxiliary sub-information further includes transmission period and/or bit numbers of transmission of the auxiliary information.

Solution 7. The electronic apparatus according to solution 6, wherein the transmission period of the auxiliary information is determined by measurement period of the user equipment and/or valid duration of the auxiliary information.

Solution 8. The electronic apparatus according to solution 6 or 7, wherein the bit numbers of transmission of the auxiliary information is determined by a measurement accuracy of the user equipment and/or a storage capacity of the user equipment.

Solution 9. The electronic apparatus according to any one of solutions 2 to 8, wherein

the processing circuitry is configured to determine the channel environment based on channel measurement information, and

the channel measurement information includes one or more of the following: a strength, phase and power of a sounding reference signal SRS received through a channel between the electronic apparatus and the user equipment, a strength, phase and power of a channel state information reference signal CSI-RS, and channel information of other frequency bands except a frequency band where the channel is located.

Solution 10. The electronic apparatus according to any one of solutions 1 to 9, wherein

the category of input information includes at least one of: channel measurement information, motion feature information of the user equipment, position information of the user equipment, sensing information of the user equipment, communication capability of the user equipment, information about the beam, perception information of the electronic apparatus, and integrated sensing and communication information,

wherein the sensing information of the user equipment is information obtained based on software and/or hardware of the user equipment, and the sensing information includes a motion-related parameter of the user equipment.

Solution 11. The electronic apparatus according to solution 10, wherein the integrated sensing and communication information includes one or more of the following: radar target detection information, and a strength, phase, and power of a radar beam reference signal.

Solution 12. The electronic apparatus according to any one of solutions 2 to 11, wherein the processing circuitry is configured so that the number of categories of input information of a prediction model determined for user equipment whose user capability does not satisfy a predetermined user capability condition is less than the number of categories of input information of a prediction model determined for user equipment whose user capability satisfies the predetermined user capability condition.

Solution 13. The electronic apparatus according to solution 12, wherein the processing circuitry is configured so that the number of categories of input information of a prediction model determined for user equipment whose movement speed is less than a predetermined speed threshold is less than the number of categories of input information of a prediction model determined for user equipment whose movement speed is greater than or equal to the predetermined speed threshold.

Solution 14. The electronic apparatus according to any one of solutions 2 to 13, wherein the processing circuitry is configured so that the number of categories of input information of a prediction model determined for user equipment located in a channel environment satisfying a predetermined environment condition is less than the number of categories of input information of a prediction model determined for user equipment located in a channel environment not satisfying the predetermined environment condition.

Solution 15. The electronic apparatus according to any one of solutions 1 to 14, wherein the processing circuitry is configured to modify beam prediction configuration information corresponding to the user equipment in an event-triggered manner, and provide the modified beam prediction configuration information to the user equipment.

Solution 16. The electronic apparatus according to solution 15, wherein the event comprises detecting that change in a channel environment where the user equipment is located satisfies a predetermined environment change condition.

Solution 17. The electronic apparatus according to any one of solutions 1 to 16, wherein the processing circuitry is configured to provide the beam prediction configuration information to the user equipment through radio resource control RRC signaling or downlink control information DCI.

Solution 18. The electronic apparatus according to any one of solutions 1 to 17, wherein for different determined categories of input information, the same prediction model is used for the beam prediction.

Solution 19. The electronic apparatus according to any one of solutions 1 to 18, wherein

the beam prediction configuration information further includes resource configuration information corresponding to the determined category of input information, wherein the resource configuration information includes transmission period and/or bit numbers of transmission of the determined category of input information, and

the processing circuitry is configured to perform the beam prediction using the prediction model based on input information reported by the user equipment based on the resource configuration information.

Solution 20. An electronic apparatus for wireless communications, comprising
processing circuitry configured to:

receive beam prediction configuration information from network side equipment servicing the electronic apparatus, wherein the beam prediction configuration information includes category of input information of a prediction model determined dynamically or semi-statically by the network side equipment for the electronic apparatus, and the prediction model is used to perform beam prediction for beam(s) to be used for communication between the electronic apparatus and the network side equipment; and

collect the input information based on the beam prediction configuration information.

Solution 21. The electronic apparatus according to solution 20, wherein

the category of input information is determined based on user capability of the electronic apparatus and/or channel environment where the electronic apparatus is located, and

the processing circuitry is configured to report the user capability to the network side equipment through radio resource control (RRC) signaling.

Solution 22. The electronic apparatus according to solution 21, wherein

user capability information included in the RRC signaling includes user auxiliary sub-information, and

a parameter of the user auxiliary sub-information includes category of auxiliary information for reflecting the user capability.

Solution 23. The electronic apparatus according to solution 22, wherein the category of auxiliary information includes at least one of:
motion feature information of the electronic apparatus, position information of the electronic apparatus, sensing information of the electronic apparatus, communication capability of the electronic apparatus, whether the electronic apparatus supports use of the prediction model, and information about the beam.
Solution 24. The electronic apparatus according to solution 23, wherein

the sensing information of the electronic apparatus is information obtained based on software and/or hardware of the electronic apparatus, and

the sensing information includes a motion-related parameter of the electronic apparatus.

Solution 25. The electronic apparatus according to any one of solutions 22 to 24, wherein the parameter of the user auxiliary sub-information further includes transmission period and/or bit numbers of transmission of the auxiliary information.
Solution 26. The electronic apparatus according to solution 25, wherein the transmission period of the auxiliary information is determined by measurement period of the electronic apparatus and/or valid duration of the auxiliary information.
Solution 27. The electronic apparatus according to solution 25 or 26, wherein the bit numbers of transmission of the auxiliary information is determined by a measurement accuracy of the electronic apparatus and/or a storage capacity of the electronic apparatus.
Solution 28. The electronic apparatus according to any one of solutions 21 to 27, wherein

the channel environment is obtained based on channel measurement information, and
the channel measurement information includes one or more of the following: a strength, phase and power of a sounding reference signal SRS received through a channel between the electronic apparatus and the network side equipment, a strength, phase and power of a channel state information reference signal CSI-RS, and channel information of other frequency bands except a frequency band where the channel is located.

Solution 29. The electronic apparatus according to any one of solutions 20 to 28, wherein

the category of input information includes at least one of: channel measurement information, motion feature information of the electronic apparatus, position information of the electronic apparatus, sensing information of the electronic apparatus, perception information of the network side equipment, and integrated sensing and communication information,

wherein the sensing information of the electronic apparatus is information obtained based on software and/or hardware of the electronic apparatus, and the sensing information includes a motion-related parameter of the electronic apparatus.

Solution 30. The electronic apparatus according to solution 29, wherein the integrated sensing and communication information includes one or more of the following: radar target detection information, and a strength, phase, and power of a radar beam reference signal.

Solution 31. The electronic apparatus according to any one of solutions 20 to 30, wherein the number of categories of input information of a prediction model determined for an electronic apparatus whose user capability does not satisfy a predetermined user capability condition is less than the number of categories of input information of a prediction model determined for an electronic apparatus whose user capability satisfies the predetermined user capability condition.

Solution 32. The electronic apparatus according to solution 31, wherein the number of categories of input information of a prediction model determined for an electronic apparatus whose movement speed is less than a predetermined speed threshold is less than the number of categories of input information of a prediction model determined for an electronic apparatus whose movement speed is greater than or equal to the predetermined speed threshold.

Solution 33. The electronic apparatus according to any one of solutions 21 to 32, wherein the number of categories of input information of a prediction model determined for an electronic apparatus located in a channel environment satisfying a predetermined environment condition is less than the number of categories of input information of a prediction model determined for an electronic apparatus located in a channel environment not satisfying the predetermined environment condition.

Solution 34. The electronic apparatus according to any one of solutions 20 to 33, wherein the processing circuitry is configured to receive beam prediction configuration information which corresponds to the electronic apparatus and is modified in an event-triggered manner.

Solution 35. The electronic apparatus according to solution 34, wherein the event comprises detecting that change in a channel environment where the electronic apparatus is located satisfies a predetermined environment change condition.

Solution 36. The electronic apparatus according to any one of solutions 20 to 35, wherein the processing circuitry is configured to receive the beam prediction configuration information through radio resource control RRC signaling or downlink control information DCI.

Solution 37. The electronic apparatus according to any one of solutions 20 to 36, wherein for different determined categories of input information, the same prediction model is used for the beam prediction.

Solution 38. The electronic apparatus according to any one of solutions 20 to 37, wherein

the beam prediction configuration information further includes resource configuration information corresponding to the determined category of input information determined by the network side equipment, wherein the resource configuration information includes transmission period and/or bit numbers of transmission of the determined category of input information, and

the processing circuitry is configured to report the input information based on the resource configuration information, for the network side equipment to perform the beam prediction using the prediction model.

Solution 39. A method for wireless communications, comprising:

determining, dynamically or semi-statically, category of input information of a prediction model for user equipment within a service range of an electronic apparatus, wherein the prediction model is used to perform beam prediction for beam(s) to be used for communication between the electronic apparatus and the user equipment; and

providing, to the user equipment, beam prediction configuration information including the determined category of input information, for the user equipment collecting the input information based on the beam prediction configuration information.

Solution 40. A method for wireless communications, comprising:

receiving beam prediction configuration information from network side equipment servicing an electronic apparatus, wherein the beam prediction configuration information includes category of input information of a prediction model determined dynamically or semi-statically by the network side equipment for the electronic apparatus, and the prediction model is used to perform beam prediction for beam(s) to be used for communication between the electronic apparatus and the network side equipment; and

collecting the input information based on the beam prediction configuration information.

Solution 41. A computer-readable storage medium, storing computer executable instructions, wherein the computer executable instructions, when executed, implements the method for wireless communications according to solution 39 or 40.

**Claims**

1. An electronic apparatus for wireless communications, comprising processing circuitry configured to:

   determine, dynamically or semi-statically, category of input information of a prediction model for user equipment within a service range of the electronic apparatus, wherein the prediction model is used to perform beam prediction for beam(s) to be used for communication between the electronic apparatus and the user equipment; and

   provide, to the user equipment, beam prediction configuration information including the determined category of input information, for the user equipment collecting the input information based on the beam prediction configuration information.

2. The electronic apparatus according to claim 1, wherein

   the processing circuitry is configured to determine the category of input information based on user capability of the user equipment and/or channel environment where the user equipment is located; and

   the processing circuitry is configured to receive, through radio resource control (RRC) signaling, a user capability reported by the user equipment.

3. The electronic apparatus according to claim 2, wherein user capability information included in the RRC signaling includes user auxiliary sub-information, and category of auxiliary information for reflecting the user capability.

4. The electronic apparatus according to claim 3, wherein the category of auxiliary information includes at least one of: motion feature information of the user equipment, position information of the user equipment, sensing information of the user equipment, communication capability of the user equipment, whether the user equipment supports use of the prediction model, and information about the beam.

5. The electronic apparatus according to claim 4, wherein

   the sensing information of the user equipment is information obtained based on software and/or hardware of the user equipment, and

   the sensing information includes a motion-related parameter of the user equipment.

6. The electronic apparatus according to any one of claims 3 to 5, wherein the parameter of the user auxiliary sub-information further includes transmission period and/or bit numbers of transmission of the auxiliary information.

7. The electronic apparatus according to claim 6, wherein the transmission period of the auxiliary information is determined by measurement period of the user equipment and/or valid duration of the auxiliary information.

8. The electronic apparatus according to claim 6 or 7, wherein the bit numbers of transmission of the auxiliary information is determined by a measurement accuracy of the user equipment and/or a storage capacity of the user equipment.

9. The electronic apparatus according to any one of claims 2 to 8, wherein

   the processing circuitry is configured to determine the channel environment based on channel measurement information, and

   the channel measurement information includes one or more of the following: a strength, phase and power of a sounding reference signal (SRS) received through a channel between the electronic apparatus and the user equipment, a strength, phase and power of a channel state information reference signal (CSI-RS), and channel information of other frequency bands except a frequency band where the channel is located.

10. The electronic apparatus according to any one of claims 1 to 9, wherein

the category of input information includes at least one of: channel measurement information, motion feature information of the user equipment, position information of the user equipment, sensing information of the user equipment, communication capability of the user equipment, information about the beam, perception information of the electronic apparatus, and integrated sensing and communication information,

wherein the sensing information of the user equipment is information obtained based on software and/or hardware of the user equipment, and the sensing information includes a motion-related parameter of the user equipment.

11. The electronic apparatus according to claim 10, wherein the integrated sensing and communication information includes one or more of the following: radar target detection information, and a strength, phase, and power of a radar beam reference signal.

12. The electronic apparatus according to any one of claims 2 to 11, wherein the processing circuitry is configured so that the number of categories of input information of a prediction model determined for user equipment whose user capability does not satisfy a predetermined user capability condition is less than the number of categories of input information of a prediction model determined for user equipment whose user capability satisfies the predetermined user capability condition.

13. The electronic apparatus according to claim 12, wherein the processing circuitry is configured so that the number of categories of input information of a prediction model determined for user equipment whose movement speed is less than a predetermined speed threshold is less than the number of categories of input information of a prediction model determined for user equipment whose movement speed is greater than or equal to the predetermined speed threshold.

14. The electronic apparatus according to any one of claims 2 to 13, wherein the processing circuitry is configured so that the number of categories of input information of a prediction model determined for user equipment located in a channel environment satisfying a predetermined environment condition is less than the number of categories of input information of a prediction model determined for user equipment located in a channel environment not satisfying the predetermined environment condition.

15. The electronic apparatus according to any one of claims 1 to 14, wherein the processing circuitry is configured to modify beam prediction configuration information corresponding to the user equipment in an event-triggered manner, and provide the modified beam prediction configuration information to the user equipment.

16. The electronic apparatus according to claim 15, wherein the event comprises detecting that change in a channel environment where the user equipment is located satisfies a predetermined environment change condition.

17. The electronic apparatus according to any one of claims 1 to 16, wherein the processing circuitry is configured to provide the beam prediction configuration information to the user equipment through radio resource control (RRC) signaling or downlink control information (DCI).

18. The electronic apparatus according to any one of claims 1 to 17, wherein for different determined categories of input information, the same prediction model is used for the beam prediction.

19. The electronic apparatus according to any one of claims 1 to 18, wherein

the beam prediction configuration information further includes resource configuration information corresponding to the determined category of input information, wherein the resource configuration information includes transmission period and/or bit numbers of transmission of the determined category of input information, and the processing circuitry is configured to perform the beam prediction using the prediction model based on input information reported by the user equipment based on the resource configuration information.

20. An electronic apparatus for wireless communications, comprising processing circuitry configured to:

receive beam prediction configuration information from network side equipment servicing the electronic apparatus, wherein the beam prediction configuration information includes category of input information of a prediction model determined dynamically or semi-statically by the network side equipment for the electronic apparatus, and the prediction model is used to perform beam prediction for beam(s) to be used for communication between the electronic apparatus and the network side equipment; and

collect the input information based on the beam prediction configuration information.

21. The electronic apparatus according to claim 20, wherein

the category of input information is determined based on user capability of the electronic apparatus and/or channel environment where the electronic apparatus is located, and
the processing circuitry is configured to report the user capability to the network side equipment through radio resource control (RRC) signaling.

22. The electronic apparatus according to claim 21, wherein

user capability information included in the RRC signaling includes user auxiliary sub-information, and
a parameter of the user auxiliary sub-information includes category of auxiliary information for reflecting the user capability.

23. The electronic apparatus according to claim 22, wherein the category of auxiliary information includes at least one of: motion feature information of the electronic apparatus, position information of the electronic apparatus, sensing information of the electronic apparatus, communication capability of the electronic apparatus, whether the electronic apparatus supports use of the prediction model, and information about the beam.

24. The electronic apparatus according to claim 23, wherein

the sensing information of the electronic apparatus is information obtained based on software and/or hardware of the electronic apparatus, and
the sensing information includes a motion-related parameter of the electronic apparatus.

25. The electronic apparatus according to any one of claims 22 to 24, wherein the parameter of the user auxiliary sub-information further includes transmission period and/or bit numbers of transmission of the auxiliary information.

26. The electronic apparatus according to claim 25, wherein the transmission period of the auxiliary information is determined by measurement period of the electronic apparatus and/or valid duration of the auxiliary information.

27. The electronic apparatus according to claim 25 or 26, wherein the bit numbers of transmission of the auxiliary information is determined by a measurement accuracy of the electronic apparatus and/or a storage capacity of the electronic apparatus.

28. The electronic apparatus according to any one of claims 21 to 27, wherein

the channel environment is obtained based on channel measurement information, and
the channel measurement information includes one or more of the following: a strength, phase and power of a sounding reference signal (SRS) received through a channel between the electronic apparatus and the network side equipment, a strength, phase and power of a channel state information reference signal (CSI-RS), and channel information of other frequency bands except a frequency band where the channel is located.

29. The electronic apparatus according to any one of claims 20 to 28, wherein

the category of input information includes at least one of: channel measurement information, motion feature information of the electronic apparatus, position information of the electronic apparatus, sensing information of the electronic apparatus, perception information of the network side equipment, and integrated sensing and communication information,
wherein the sensing information of the electronic apparatus is information obtained based on software and/or hardware of the electronic apparatus, and the sensing information includes a motion-related parameter of the electronic apparatus.

30. The electronic apparatus according to claim 29, wherein the integrated sensing and communication information includes one or more of the following: radar target detection information, and a strength, phase, and power of a radar beam reference signal.

31. The electronic apparatus according to any one of claims 20 to 30, wherein the number of categories of input information of a prediction model determined for an electronic apparatus whose user capability does not satisfy a predetermined user capability condition is less than the number of categories of input information of a prediction model determined for an electronic apparatus whose user capability satisfies the predetermined user capability condition.

32. The electronic apparatus according to claim 31, wherein the number of categories of input information of a prediction model determined for an electronic apparatus whose movement speed is less than a predetermined speed threshold is less than the number of categories of input information of a prediction model determined for an electronic apparatus whose movement speed is greater than or equal to the predetermined speed threshold.

33. The electronic apparatus according to any one of claims 21 to 32, wherein the number of categories of input information of a prediction model determined for an electronic apparatus located in a channel environment satisfying a predetermined environment condition is less than the number of categories of input information of a prediction model determined for an electronic apparatus located in a channel environment not satisfying the predetermined environment condition.

34. The electronic apparatus according to any one of claims 20 to 33, wherein the processing circuitry is configured to receive beam prediction configuration information which corresponds to the electronic apparatus and is modified in an event-triggered manner.

35. The electronic apparatus according to claim 34, wherein the event comprises detecting that change in a channel environment where the electronic apparatus is located satisfies a predetermined environment change condition.

36. The electronic apparatus according to any one of claims 20 to 35, wherein the processing circuitry is configured to receive the beam prediction configuration information through radio resource control (RRC) signaling or downlink control information (DCI).

37. The electronic apparatus according to any one of claims 20 to 36, wherein for different determined categories of input information, the same prediction model is used for the beam prediction.

38. The electronic apparatus according to any one of claims 20 to 37, wherein

the beam prediction configuration information further includes resource configuration information corresponding to the determined category of input information determined by the network side equipment, wherein the resource configuration information includes transmission period and/or bit numbers of transmission of the determined category of input information, and
the processing circuitry is configured to report the input information based on the resource configuration information, for the network side equipment to perform the beam prediction using the prediction model.

39. A method for wireless communications, comprising:

determining, dynamically or semi-statically, category of input information of a prediction model for user equipment within a service range of an electronic apparatus, wherein the prediction model is used to perform beam prediction for beam(s) to be used for communication between the electronic apparatus and the user equipment; and
providing, to the user equipment, beam prediction configuration information including the determined category of input information, for the user equipment collecting the input information based on the beam prediction configuration information.

40. A method for wireless communications, comprising:

receiving beam prediction configuration information from network side equipment servicing an electronic apparatus, wherein the beam prediction configuration information includes category of input information of a prediction model determined dynamically or semi-statically by the network side equipment for the electronic apparatus, and the prediction model is used to perform beam prediction for beam(s) to be used for communication between the electronic apparatus and the network side equipment; and
collecting the input information based on the beam prediction configuration information.

**41.** A computer-readable storage medium, storing computer executable instructions, wherein the computer executable instructions, when executed, implements the method for wireless communications according to claim 39 or 40.

Antenna array

Directional beam

UE

UE

UE

Base station

FIG.1

Base station

Optimal
beam pair

UE

FIG.2

**300**

Determination unit 301

Providing unit 303

FIG.3

Electronic apparatus300

Input information

Channel
measurement result

UE

(a)

Prediction model

Electronic apparatus300

Beam prediction

UE

(b)

FIG.4

Accelerometer       Gyroscope       Compass

FIG.5

```
 UE-NR-Capability  ::=              SEQUENCE {
accessStratumRelease               accessStratumRelease
……,
UE-Auxiliary-Information           UE-Auxiliary-Parameters
   },

UE-Auxiliary-Parameters  ::=       SEQUENCE {
AuxiliarySet                        SEQUENCE{# to be defined #}
AuxiliaryPeriod                     SEQUENCE{# to be defined #}
AuxiliaryBits                       SEQUENCE{# to be defined #}
……
}
```

FIG.6

FIG.7

FIG.8

FIG.9

FIG.10

| Electronic apparatus 300 | | User equipment |
|---|---|---|

1.Base station inquiries about a user capability

2.Perform initial channel measurement

3.Base station determines a beam prediction modality set and transmission configuration information

4.Base station sends a beam prediction notification to the user

5.Base station notifies the user of the beam prediction modality set and the transmission configuration information

6.Perform channel measurement for beam prediction

7.User collects corresponding modal information based on the beam prediction modality set

8.User feeds back the collected information to the base station according to the transmission configuration

9.Base station integrates all modal information corresponding to the beam prediction modality set, and performs beam prediction

10.As the base station detects that the channel environment where the user is located has changed, the beam prediction modality set and the transmission configuration information are updated and notified to the user

FIG.11

**FIG.12**

**FIG.13**

FIG.14

FIG.15

| 300.Electronic apparatus | | User equipment |
|---|---|---|

1.Base station inquiries about a user capability

2.Perform initial channel measurement

3.Initial grouping of users

4.Base station selects a user subset

5.Base station determines a beam prediction modality set and transmission configuration information

6.Base station sends a beam prediction notification to the user group

7.Base station notifies the user of the beam prediction modality set and the transmission configuration information

8.Perform channel measurements for beam prediction

9.User collects corresponding modal information based on the beam prediction modality set

10.User feeds back the collected information to the base station according to the transmission configuration

11.Base station integrates all modal information corresponding to the beam prediction modality set, and performs beam prediction

12.As the base station detects that the channel environment where the user is located has changed, the beam prediction modality set and the transmission configuration information are updated and sent to the user

13.Base station configures the RSRP threshold $r_0$

14.All users in the group measure the RSRP of the predicted optimal beam

15.Intra-group splitting or inter-group merging

16.Base station selects a new user subset for a new user group

...

FIG.16

**FIG.17**

**FIG.18**

<u>S2000</u>

Start — S2002

Determine, dynamically or semi-statically, category of input information of a prediction model for user equipment within a service range of an electronic apparatus — S2004

Provide, to the user equipment, beam prediction configuration information including the determined category of input information, for the user equipment collecting the input information based on the beam prediction configuration information — S2006

End — S2008

FIG.19

**S2100**

```
┌─────────────┐
│    Start    │── S2102
└─────────────┘
       │
       ▼
┌────────────────────────────┐
│   Receive beam prediction   │── S2104
│ configuration information from │
│  network side equipment servicing │
│   an electronic apparatus   │
└────────────────────────────┘
       │
       ▼
┌────────────────────────────┐
│                            │── S2106
│  Collect the input information based │
│ on the beam prediction configuration │
│         information         │
└────────────────────────────┘
       │
       ▼
┌─────────────┐
│     End     │── S2108
└─────────────┘
```

FIG.20

FIG.21

FIG.22

900

912 RADIO COMMUNICATION I/F

913 BB
914 RF
915
916

913 BB
914 RF
915
916

908 MICROPHONE
917
901 PROCESSOR
918 BATTERY

907 SENSOR
902 MEMORY
919 AUXILIARY CONTROLLER

906 CAMERA
903 STORAGE
904 EXTERNAL CONNECTION I/F

911 SPEAKER
910 DISPLAY DEVICE
909 INPUT DEVICE

FIG.23

FIG.24

CPU ⌐ 2601    ROM ⌐ 2602    RAM ⌐ 2603

⌐ 2604

⌐ 2605

Input/output interface

Input part ⌐ 2606    Output part ⌐ 2607    Storage part ⌐ 2608    Communication part ⌐ 2609    Driver ⌐ 2610

2600

Removable medium ⌐ 2611

FIG.25

## INTERNATIONAL SEARCH REPORT

| International application No. |
| --- |
| **PCT/CN2024/090900** |

### A. CLASSIFICATION OF SUBJECT MATTER

H04W 72/044(2023.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 波束, 预测, 确定, 模型, 输入, 输入信息, 多模态, 模态, 类别, 种类, 配置, 测量, 设备, 终端, 速度, 位置, 最优, beam, measurement, RSRP, dynamical, model, deep multimodal learning, optimization, input, configuration

### C. DOCUMENTS CONSIDERED TO BE RELEVANT

| Category* | Citation of document, with indication, where appropriate, of the relevant passages | Relevant to claim No. |
| --- | --- | --- |
| A | CN 111954228 A (BEIJING SAMSUNG TELECOM R&D CENTER et al.) 17 November 2020 (2020-11-17) description, paragraphs [0221]-[0275] | 1-41 |
| A | CN 115395995 A (BEIJING SAMSUNG TELECOM R&D CENTER et al.) 25 November 2022 (2022-11-25) entire document | 1-41 |
| A | CN 112152948 A (HUAWEI TECHNOLOGIES CO., LTD.) 29 December 2020 (2020-12-29) entire document | 1-41 |
| A | US 2021400651 A1 (TELEFONAKTIEBOLAGET LM ERICSSON) 23 December 2021 (2021-12-23) entire document | 1-41 |

☐ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **26 July 2024** | **03 August 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2024/090900**

| Patent document cited in search report | | | Publication date (day/month/year) | Patent family member(s) | | | Publication date (day/month/year) |
|---|---|---|---|---|---|---|---|
| CN | 111954228 | A | 17 November 2020 | None | | | |
| CN | 115395995 | A | 25 November 2022 | None | | | |
| CN | 112152948 | A | 29 December 2020 | None | | | |
| US | 2021400651 | A1 | 23 December 2021 | WO | 2020036521 | A1 | 20 February 2020 |
| | | | | EP | 3837775 | A1 | 23 June 2021 |
| | | | | EP | 3837775 | A4 | 23 March 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310508570

**Non-patent literature cited in the description**

- **A. ALKHATEEB et al.** DeepMIMO: A Generic Deep Learning Dataset for Millimeter Wave and Massive MIMO Applications. *Proc. ITA*, February 2019, 1-8